# EUROPÄISCHE PATENTSCHRIFT

(11) **EP 4 101 981 B1**
(45) Veröffentlichungstag und Bekanntmachung des Hinweises auf die Patenterteilung: **25.02.2026**
(21) Anmeldenummer: 22174978.1
(22) Anmeldetag: 24.05.2022
(51) Int. Cl.: D21J 3/00, D21J 7/00

(54) **FORMSTATION, FASERFORMANLAGE UND VERFAHREN ZUR HERSTELLUNG VON FORMTEILEN AUS FASERMATERIAL**
FORMING STATION, FIBER MOULDING PLANT AND METHOD FOR THE PRODUCTION OF FIBROUS MOULDINGS
STATION DE FORMAGE, INSTALLATION DE MOULAGE DE FIBRES ET PROCÉDÉ DE FABRICATION DE PIÈCES MOULÉES À PARTIR DE MATIÈRE FIBREUSE

(30) Priorität: 08.06.2021 DE 102021114662
(43) Veröffentlichungstag der Anmeldung: 14.12.2022
(73) Patentinhaber: KIEFEL GmbH, 83395 Freilassing (DE)
(72) Erfinder: Knoll, Peter, 83404 Ainring (DE); Wohlmayer, Sebastian, 83404 Ainring (DE)
(74) Vertreter: DTS Patent- und Rechtsanwälte PartmbB

(56) Entgegenhaltungen:
- WO-A1-2020/132776
- US-B1- 6 245 199

## Beschreibung

### Gebiet der Erfindung

Die Erfindung betrifft eine erste Formstation zum Anformen und Vorformen von Formteilen aus Fasermaterial, eine Faserformanlage mit einer solchen ersten Formstation und ein Verfahren zum Betreiben dieser ersten Formstation bzw. der Faserformanlage und ein mit einem solchen Verfahren hergestelltes Formteil.

### Hintergrund der Erfindung

Es ist wünschenswert, Bürger und Umwelt vor Kunststoffverschmutzung zu schützen. Insbesondere verursachen Einwegplastik-Produkte wie Verpackungsmaterialien oder Plastikbesteck und Plastikgeschirr eine große Abfallmenge. Insofern besteht für Verpackungsmaterialien und Behältnisse aus Kunststoff ein steigender Bedarf an Ersatzmaterialien, mit denen diese Produkte aus recycelbaren Kunststoffen, Materialien mit weniger Kunststoffanteil oder gar aus kunststofffreien Materialien herzustellen.

Die Vorstellung, Naturfasern anstelle von klassischen Kunststoffen im Extrusionsverfahren zu verwenden, existiert mindestens schon seit Anfang der 1990er Jahre, siehe beispielsweise EP 0 447 792 B1. Rohstoffgrundlage ist hier, wie in den meisten faserverarbeitenden Verfahren, die Pulpe. Prinzipiell besteht die Pulpe aus Wasser, Naturfasern und einem Bindemittel wie zum Beispiel industrielle Stärke (Kartoffelstärke) und weist eine breiige Konsistenz auf.

Da Verbraucher an verschiedensten naturverträglichen Produkte mit unterschiedlichen Größen, Formen und Anforderungen interessiert sind und diese nicht unbedingt in sehr großen Stückzahlen nachfragen, wäre es wünschenswert, ein Herstellungsverfahren für umweltverträgliche Formteile aus Naturfasern und eine entsprechende Maschine zur Verfügung zu haben, um diese Produkte (Formteile) effektiv, flexibel und mit guter Qualität reproduzierbar herstellen zu können. Hierbei ist es außerdem sehr wichtig, wenn die Formteile in möglichst kurzer Zeit mit großer Stückzahl hergestellt werden können, sodass Anlagen oder Station mit großen Durchsatz wünschenswert sind.

Weiterer relevanter Stand der Technik ist in folgenden Dokumenten offenbart: US 6 245 199 B1 und WO 2020/132776 A1.

### Zusammenfassung der Erfindung

Der Erfindung liegt die Aufgabe zugrunde, Faserformstation bzw. Faserformanlagen für Formlinge aus Fasermaterial und ein entsprechendes Herstellungsverfahren bereitzustellen, mit dem diese Produkte (Formlinge) effektiv, flexibel, mit guter Qualität und möglichst hohem Durchsatz reproduzierbar herzustellen sind.

Die Aufgabe wird gelöst durch eine erste Formstation für eine Faserformanlage zum Anformen und Vorformen eines Formteils aus Fasermaterial, vorzugsweise umweltverträglich abbaubaren Fasermaterial, in einem Faserformprozess umfassend:
- ein Reservoir mit einer Pulpe als flüssige Lösung umfassend das Fasermaterial für das anzuformende Formteil;
- ein erstes und zweites Saugwerkzeug als Anformstation mit jeweils einer Vielzahl an Saugköpfen zum Ansaugen des Fasermaterials für das Anformen des Formteils aus dem Reservoir mit der Pulpe;
- eine Vorpressstation mit einem Vorpresswerkzeug mit einer auf das erste und zweite Saugwerkzeug angepassten oder anpassbaren Kontur zum Vorformen der in den ersten beziehungsweise zweiten Saugwerkzeugen befindlichen angeformten Formteile, wobei die Formteile mit einem Vorpressdruck auf das Vorpresswerkzeug gepresst werden, um einen Feuchtigkeitsgehalt im Formteil zu reduzieren und eine Formstabilisierung des Formteils zu bewirken; und
- eine Transportvorrichtung umfassend einen Träger mit dem auf einer ersten Seite des Trägers angeordnetem ersten Saugwerkzeug und dem auf der gegenüberliegenden zweiten Seite des Trägers angeordneten zweiten Saugwerkzeug, wobei die jeweiligen Saugköpfe auf einer jeweils von Träger abgewandten Seite der Saugwerkzeuge angeordnet sind, wobei der Träger mittels der Transportvorrichtung, vorzugsweise unabhängig voneinander, gedreht und zumindest von einer ersten Position zur Aufnahme von Fasermaterial aus dem Reservoir an Pulpe mittels eines der Saugwerkzeuge zu einer zweite Position zur Ausübung des Vorpressdrucks auf die in dem Saugwerkzeug befindlichen Formteile entlang eines Fahrwegs bewegt werden kann.

Der Begriff "Fasermaterial" bezeichnet zur Formung von Formlingen geeignete Fasermaterialien aller Art, wobei sich diese gegebenenfalls auch unter Umwelteinflüssen wie Feuchtigkeit, Temperatur und/oder Licht zersetzen lassen. Der Zersetzungsprozess erfolgt über die Zeit, gegebenenfalls auch kurzfristig, also beispielsweise im Bereich von Tagen, Wochen oder wenigen Monaten. Hierbei gehen vorzugsweise weder vom Fasermaterial noch von den Zersetzungsprodukten eine Umweltgefährdung oder Kontamination ausgehen. Fasermaterialien im Sinne der vorliegenden Erfindung sind beispielsweise Kunstfasern oder Naturfasern gewonnen aus Zellstoff, Papier, Pappe, Holz, Gras, Pflanzenfasern, Zuckerrohresten, Hanf etc. oder aus deren Bestandteilen oder Teilen davon und/oder entsprechend wiederverwertetes Material. Ein umweltverträglich abbaubarem Fasermaterial kann aber auch künstlich hergestellte Fasern wie beispielsweise PLA (Polylactide) etc. bezeichnet, die den voranstehenden Fasermaterialien entsprechen oder deren Eigenschaften besitzen. Vorzugsweise ist das Fasermaterial kompostierbar. Vorzugsweise ist das Fasermaterial und die daraus hergestellten Behältnisse für die Einbringung in den Wertstoffkreislauf der deutschen Biotonne und als Ressource für Biogasanlagen geeignet. Vorzugsweise sind die Fasermaterialien und die daraus hergestellten Behältnisse biologisch abbaubar gemäß EU-Norm EN 13432.

Der Begriff "Pulpe" bezeichnet flüssige Massen, die Fasern enthalten, hier das Fasermaterial. Der Begriff "flüssig" bezeichnet hier den Aggregatzustand der Pulpe, wobei die flüssige Pulpe das Fasermaterial in Form von Fasern umfasst (flüssige Lösung mit dem Fasermaterial). Hierbei können die Fasern als einzelne Fasern, als Fasergebilde oder Fasergruppe aus mehreren zusammenhängenden Fasern vorliegen. Die Fasern stellen das Fasermaterial unabhängig davon dar, ob sie sich als einzelne Fasern, als Fasergebilde oder Fasergruppe in der Pulpe befinden. Hierbei sind die Faser in der flüssigen Lösung so gelöst, dass sie mit möglichst gleicher Konzentration ortsunabhängig in der flüssigen Lösung schweben, beispielsweise als Gemisch oder Suspension aus flüssiger Lösung und Fasermaterial. Dazu kann beispielsweise die Pulpe in manchen Ausführungsformen entsprechend temperiert und/oder umgewälzt werden. Die Pulpe besitzt vorzugsweise eine niedrige Stoffdichte, d.h. einen Anteil von Fasermaterial kleiner 8%. In einer Ausführungsform wird im erfindungsgemäßen Verfahren eine Pulpe mit einem Anteil an Fasermaterial kleiner 5%, vorzugsweise kleiner 2%, besonders bevorzugt zwischen 0,5% und 1,0 %, verwendet. Die vorangegangenen Prozentangaben sind als Gewichtsprozente zu verstehen. Dieser geringe Anteil an Fasermaterial kann unter anderem eine Verklumpung des Fasermaterials in der flüssigen Lösung vermeiden, sodass das Fasermaterial noch mit guter Qualität am Saugwerkzeug anformbar ist. Verklumptes Fasermaterial kann zwar durch das Saugwerkzeug angesaugt werden, würde aber vermutlich ein Formteil mit fluktuierender Schichtdicke zur Folge haben, was in der Produktion der Formteile nach Möglichkeit zu vermeiden ist. Insofern sollte der Anteil des Fasermaterials in der Pulpe vorzugsweise klein genug sein, damit ein Verklumpen oder ein Aneinanderketten nicht oder nur in einem vernachlässigbaren Maße erfolgt. Die flüssige Lösung kann dabei jede für den Faserformprozess geeignete Lösung sein. Beispielsweise kann die Pulpe eine wässerige Lösung mit dem Fasermaterial sein. Eine wässrige Lösung stellt unter anderem eine einfach handhabbare Lösung dar.

Der Faserformprozess bezeichnet die Prozessschritte, die an der Formung des Formteils beteiligt sind, beginnend mit der Bereitstellung der Pulpe, des Anformens des Formteils in der Anformstation der ersten Formstation aus dem Fasermaterial aus der Pulpe, des Vorformens des Formteils in der Vorformstation der ersten Formstation, des Heißpressen des Formteils in der Heißpressstation der zweite Formstation und gegebenenfalls des Beschichtens des Formteils mit funktionalen Schichten, wobei das Beschichten an jeder dafür für die jeweilige aufzubringende Schicht geeigneten Stelle im Faserformprozess angeordnet sein kann.

Die Formteile können dabei eine beliebige Form, hier auch als Kontur bezeichnet, aufweisen, sofern diese Form (oder Kontur) im erfindungsgemäßen Verfahren herstellbar ist bzw. sich das Verfahren für die Herstellung dieser Form (oder Kontur) eignet. Hierbei können die für den Faserformprozess verwendeten Komponenten auf die jeweilige Form (oder Kontur) des Formteils angepasst sein. Bei unterschiedlichen Formteilen mit unterschiedlichen Formen (oder Konturen) können unterschiedliche entsprechend angepasste Komponenten wie beispielsweise das Saugwerkzeug, der Saugkopf, die Vorpressstation, die Heißpressstation etc. verwendet werden. Vorzugsweise ist die Soll-Kontur des Formteils und damit die entsprechenden formenden Komponenten so gestaltet, dass alle Flächen des Formteils einen Winkel α von mindestens 3 Grad zur Pressrichtung beim Heißpressen besitzen. Endgeformte Formteile können unterschiedlichste Produkte darstellen, beispielweise Becher, Behälter, Gefäße, Deckel, Schalen, Portionsgefäße, Umhüllen oder Umgefäße für unterschiedlichste Zwecke.

Das Saugwerkzeug bezeichnet hier das Werkzeug, in dem der oder die Saugköpfe zum Anformen des Formteils angeordnet sind. Hierbei sind mehrere Saugköpfe in dem gemeinsamen Saugwerkzeug angeordnet, sodass mit dem Bewegen des Saugwerkzeugs die einzelnen Saugköpfe im Saugwerkzeug gleichermaßen mitbewegt werden. Die Medienversorgung des Saugwerkzeugs mit mehreren Saugköpfen wird im Saugwerkzeug dabei in geeigneter Weise zu den einzelnen Saugköpfen durch den Träger hindurchgeführt.

Das Aufsetzen des Saugwerkzeugs auf die Pulpe bezeichnet ein Berühren der Pulpe mit allen sich im Saugwerkzeug befindlichen Saugköpfen, die für das Anformen von Formteilen vorgesehen sind, in der Weise, dass aufgrund des mit dem Saugwerkzeug an die Pulpe angelegten Unterdrucks bzw. Saugdrucks das Fasermaterial aus der Pulpe herausgesaugt beziehungsweise die Pulpe mit darin gelöstem Fasermaterial angesaugt wird. Beim partiellem Eintauchen in die Pulpe wird das Saugwerkzeug nicht nur auf die Pulpe aufgesetzt, sondern in sie hineingetaucht. Die Eintauchtiefe des Saugwerkzeugs in die Pulpe hängt von der jeweiligen Anwendung und dem jeweiligen Faserformprozess ab und kann sich je nach Anwendung und gegebenenfalls dem anzuformenden Formteil unterscheiden.

Die Saugköpfe umfassen jeweils eine dreidimensional geformte Saugkopf-Saugseite, die mit ihrer Form an eine Kontur des späteren Formteils angepasst ist, und das Formteil auf der Saugkopf-Saugseite mittels Unterdruck im Saugwerkzeug angeformt wird. Hierbei kann der Saugkopf eine Negativform besitzen. Als Negativform wird eine Form bezeichnet, wo sich die Saugseite des Saugkopfes, also die Seite, wo sich das Fasermaterial aufgrund der Saugwirkung des Saugkopfes ablagert und damit das Formteil anformt, auf der Innenseite des Saugkopfes befindet, sodass diese Innenseite nach Aufsetzen des Saugkopfes auf die Pulpe oder Eintauchen des Saugkopfes in die Pulpe eine Kavität bildet, in die die Pulpe mit dem Fasermaterial eingesaugt wird. Bei einer Negativform ist die Außenseite des späteren Formteils zur Innenseite des Saugkopfes gerichtet. Das Formteil sitzt nach Anformung daher innen auf der Innenseite des Saugkopfes. Hierbei kann der Saugkopf auch eine Positivform besitzen. Als Positivform wird eine Form bezeichnet, wo sich die Saugseite des Saugkopfes, also die Seite, wo sich das Fasermaterial aufgrund der Saugwirkung des Saugkopfes ablagert und damit das Formteil anformt, auf der Außenseite des Saugkopfes befindet, sodass diese Außenseite nach Aufsetzen des Saugkopfes auf die Pulpe oder Eintauchen des Saugkopfes in die Pulpe keine Kavität bildet. Bei einer Positivform ist die Innenseite des späteren Formteils zur Außenseiten des Saugkopfes gerichtet. Das Formteil sitzt nach Anformung daher auf der Außenseite des Saugkopfes auf.

Das Anformen des Formteils bezeichnet ein erstes Vorformen des Formteils, wobei sich dieses aus vormals willkürlich in der Pulpe verteiltem Fasermaterial mittels Anlagerung des Fasermaterials an die Kontur des Saugkopfes mit der entsprechenden Kontur bildet. Das angeformte Formteil besitzt noch einen großen Anteil, beispielsweise 70% - 80% (Gewichtsprozent), an flüssiger Lösung, beispielsweise Wasser, und ist daher noch nicht stabil formbeständig.

Durch die Anformstation wird auf einfache Weise aus einer Pulpe mit einem Fasermaterial heraus ein Formteil angeformt, die sehr flexibel je nach Ausgestaltung der Kontur des Saugkopfes Formteile mit unterschiedlichsten Konturen liefern kann. Hierbei stellt das Verhältnis Breite beziehungsweise Durchmesser zu Höhe des Formteils keinen einschränkenden oder kritischen Parameter für die Qualität der Herstellung der jeweiligen Formteile dar. Die erfindungsgemäße Anformstation ermöglicht es, die Formteile sehr reproduzierbar und mit großen Genauigkeit und Güte bezüglich Form und Schichtdicke der einzelnen Formteilabschnitte herzustellen. Die Anformstation ist in der Lage, Fasern unterschiedlichster Art zu verarbeiten, sofern diese so in Lösung gebracht werden können, dass eine größere Verklumpung der Fasern in der flüssigen Lösung vor der Verarbeitung vermieden werden kann. Insbesondere können auf diese Weise stabile Formteile einfach, effektiv und flexibel aus umweltverträglich abbaubarem Fasermaterial mit guter Qualität und guter Reproduzierbarkeit hergestellt werden.

In einer weiteren Ausführungsform wird die Saugkopf-Saugseite des Saugkopfes aus einem porösen Sieb auf einer saugseitigen Oberfläche des Saugkopfes gebildet. In einer weiteren Ausführungsform umfasst das Saugwerkzeug eine Vielzahl an Saugkanälen, die auf der saugseitigen Oberfläche unterhalb des Siebes enden und so über die saugseitige Oberfläche verteilt sind, dass eine im Wesentlichen gleiche Saugleistung in allen Bereichen zwischen Sieb und saugseitiger Oberfläche ermöglicht wird. In einer weiteren Ausführungsform können sich die Formen der Saugköpfe im Saugwerkzeug zumindest zum Teil unterscheiden, vorzugsweise sind gleiche Formen der Saugköpfe benachbart im Saugwerkzeug angeordnet. Die unterschiedlichen Formen können beispielsweise modulweise in dem Saugwerkzeug angeordnet sein. Ein solches Sagwerkzeug ist in der Lage, unterschiedliche Formteile simultan im gleichen Faserformprozess herzustellen. Beispielsweise können so Gefäße wie Becher und dazugehörige Deckel im gleichen Saugwerkzeug simultan angeformt und weiterverarbeitet werden.

Durch die Vorformstation wird auf einfache Weise aus einem mechanisch noch instabilen Formteil mittels Vorpressen ein für die Weiterbearbeitung hinreichen stabiles vorgeformtes Formteil mit weiter reduziertem Anteil an flüssiger Lösung hergestellt. Die Vorformstation ermöglicht es, die Formteile sehr reproduzierbar und mit großer Genauigkeit und Güte bezüglich Form und Schichtdicke der einzelnen Formteilabschnitte herzustellen und weiterzuverarbeiten. In einer Ausführungsform kann das Vorpressen bei einer Temperatur der Vorpressstation kleiner 80°C, vorzugsweise kleiner 50°C, besonders bevorzugt bei Raumtemperatur, durchgeführt werden. Durch das Vorpressen wird der Flüssigkeitsgehalt im Formteil auf ca. 55% - 65% (Gewichtsprozent) reduziert und das Formteil so vorgefestigt, dass es für eine Werkzeugübergabe hinreichend formstabil ist. Eine zu hohe Temperatur würde den Flüssigkeitsgehalt im Formteil zu weit absenken, wodurch das Material für das nachfolgende Heißpressen bereits zu steif sein könnte. Gerade die Kombination aus Vorpressen und Heißpressen verbessert eine Reproduzierbarkeit bei der Herstellung von Formteilen mit guter Qualität und einer geringen Ausschussmenge. In einer weiteren Ausführungsform wird das Vorpressen bei dem Vorpressdruck zwischen 0,2 N/mm² und 0,3 N/mm², vorzugsweise zwischen 0,23 N/mm² und 0,27 N/mm², durchgeführt. Diese gegenüber dem Heißpressdruck geringeren moderaten Drücke ermöglichen ein schonendes Verfestigen des Formteils unter moderater Flüssigkeitsreduktion, was für einen ausschussarmen Heißpressvorgang vorteilhaft ist. Hierbei umfasst die Vorpressstation ein Vorpresswerkzeug, dessen Form an das im Saugwerkzeug verbleibende angeformte Formteil so angepasst ist, dass dieses an das Vorpresswerkzeug so angesetzt werden kann, dass es zwischen Vorpresswerkzeug und Saugwerkzeug angeordnet ist, damit das Saugwerkzeug mit dem Vorpressdruck auf das Vorpresswerkzeug gepresst werden kann. Hierbei kann das Saugwerkzeug auf ein ruhendes Vorpresswerkzeug gepresst werden oder das Vorpresswerkzeug wird auf ein in der zweiten Position ruhendes Saugwerkzeug gepresst. In einer Ausführungsform wird das Saugwerkzeug in der zweiten Position auf das Vorpresswerkzeug aufgesetzt und mittels der Transportvorrichtung über den Träger auf das Vorpresswerkzeug gepresst. Alternativ kann das Saugwerkzeug auch an einem Roboterarm befestigt sein, der den Vorpressdruck selber über das Saugwerkzeug auf das Vorpresswerkzeug ausübt. Alternativ kann das Vorpressen als Membranpressen ausgeführt werden, wobei das Vorpresswerkzeug als flexible Membran ausgeführt ist und der Vorpressdruck als Gasdruck an die Membran angelegt wird, die daraufhin auf die Außenkontur das Formteils gepresst wird. Das Membranpressen ist besonders für Geometrien des Formteils geeignet, wo auf eine große Fläche Druck ausgeübt werden soll. Mit einem Membranpressen können auch Flächen simultan unter gleichen Druck gesetzt werden, die in beliebiger räumlicher Ausrichtung senkrecht zueinanderstehen, da beim Membranpressen der Vorpressdruck mittels Gasdruck, beispielsweise mittels Pressluft, erzeugt wird, der richtungsunabhängig auf die Membran wirkt. Auch vorteilhaft sind Vorpresswerkzeuge aus einem Elastomer oder zumindest teilweise aus Elastomer, da sich das Elastomer unter Druck noch leicht verformen lässt und sich somit an ein sich möglicherweise unter dem Vorpressdruck verbiegendes Saugwerkzeug flexibel anpasst und damit die Homogenität der Formung der diversen Formteile im Saugwerkzeug verbessert. Für erhöhte Vorpress-Temperaturen unterhalb von 100°C ist beispielsweise Silikon als Elastomer als ein in diesem Bereich temperaturbeständiges Material ebenfalls gut geeignet.

Der Träger hat eine erste Seite und eine dieser Seite gegenüberliegende zweite Seite, auf denen jeweils ein Saugwerkzeug mit jeweils einer Vielzahl an Saugköpfen zum Anformen einer Vielzahl an Formlingen angeordnet ist. Die Befestigung der Saugwerkzeuge auf dem Träger kann dabei fest oder reversibel ausgeführt sein. Im letzten Fall wird ein automatischer Wechsel der Saugköpfe ermöglicht. Die jeweiligen Saugköpfe sind dabei auf der jeweils von Träger abgewandte Seite der Saugwerkzeuge angeordnet, damit die Saugköpfe für das Anformen und Vorpressen der Formlinge frei zugänglich sind. Dadurch, dass auf beiden Seiten des Trägers Saugwerkzeuge angeordnet sind, kann das eine Saugwerkzeug zum Anformen und das andere Saugwerkzeug zum Vorpressen verwendet werden. Da das Anformen und das Vorpressen eine gewisse Prozesszeit in Anspruch nimmt, können während dieses Prozesses die Formlinge aus dem anderen Saugwerkzeug entweder entnommen oder weiterprozessiert werden. Durch diese wird mit einer einzelnen ersten Formstation der Durchsatz deutlich erhöht im Vergleich zu einer rein sequentiellen Abarbeitung von Anformen, Vorpressen und Übergabe der Formlinge an eine Transfereinheit bei nur einem Saugwerkzeug. Dadurch kann mit der erfindungsgemäßen ersten Formstation der Durchsatz einer entsprechenden Faserformanlage deutlich gesteigert werden.

Damit diese Prozessbeschleunigung erreicht werden kann, ist die Transportvorrichtung zum Drehen und Bewegen des Trägers und damit der darauf angeordneten Saugköpfe als Anformstation zwischen einer ersten Position zur Aufnahme von Fasermaterial aus dem Reservoir an Pulpe mittels eines der Saugwerkzeuge und einer zweiten Position zur Ausübung des Vorpressdrucks auf die in dem Saugwerkzeug befindlichen Formteile vorgesehen. Die Strecke zwischen den ersten und zweiten Positionen wird als Fahrweg bezeichnet, der je nach Ausgestaltung der ersten Formstation ein linearer Fahrweg oder ein je nach Anforderung anders gestalteter Fahrweg sein. Die Transportvorrichtung kann je nach Anforderung und Gewicht der Saugwerkzeuge sowie des anzulegenden Vorpressdrucks unterschiedlich ausgestaltet sein. Beispielsweise kann der Träger an einem Schienengestänge aufgehängt und mittels eines Motors, Seilzugs, Kette oder anderer geeigneter Mittel entlang der Schienenstränge bewegt werden. Für eine Drehung des Trägers kann dieser beispielsweise über eine Welle in entsprechenden Lager drehbar gelagert sein. Hierbei würden die Lager des Trägers entlang des Fahrwegs bewegt werden. Die Drehung des Trägers kann mit einem entsprechenden Drehmotor ausgeführt werden, wobei die Drehung durch den Motor direkt oder mittels Ketten, Zahnkränzen etc. auf den Träger übertragen werden kann. Der Fachmann ist in der Lage, solche Mechaniken zur Bewegung einer Komponente entlang eines Fahrwegs und zu deren Drehung zur Verfügung zu stellen.

Die erfindungsgemäße erste Formstation ist somit in der Lage Formlinge aus Fasermaterial bereitzustellen, in dem diese effektiv, flexibel, mit guter Qualität und möglichst hohem Durchsatz reproduzierbar herzustellen sind.

In einer Ausführungsform ist dafür die Transportvorrichtung dazu vorgesehen, den Träger nach erfolgtem Vorpressen mit einem der Saugwerkzeuge in der zweiten Position ohne Drehung des Trägers in die erste Position zu verfahren, dass nunmehr Formteile aus dem Reservoir mit Pulpe in dem beim erfolgten Vorpressen von dem Vorpresswerkzeug abgewandten Saugwerkzeug angeformt werden können. Damit sind beide Saugwerkzeuge mit Formlingen belegt, sodass nachfolgend während des Transfers der angeformten Formlinge die bereits vorgepressten Formlinge zeitsparend aus dem anderen Saugwerkzeug entnommen werden können.

In einer weiteren Ausführungsform ist dafür die Transportvorrichtung dazu vorgesehen, nach dem erfolgten Vorpressen der Formteile mit dem einen der Saugwerkzeuge und nach dem erfolgten Anformen der Formteile in dem anderen der Saugwerkzeuge den Träger an einer geeigneten Position zwischen der ersten und zweiten Position zu drehen und die vorgepressten Formteile an eine Transfereinheit der Transportvorrichtung zu übergeben, um sie zur Weitergabe an nachfolgende Prozesse aus dem Fahrweg des Trägers zu entfernen.

In einer weiteren Ausführungsform ist die Transportvorrichtung dazu vorgesehen, die vorgepressten Formlinge mittels eines Druckstoßes aus dem Saugwerkzeug auszustoßen und so an die Transfereinheit zu übergeben. Die Formlinge werden grundsätzlich aufgrund des Unterdrucks in den Saugköpfen im Saugwerkzeug gehalten. Bei Abstellen des Unterdrucks in einem nach unter zeigenden Saugwerkzeug müsste sich die Formlinge aufgrund der Schwerkraft aus diesem Saugwerkzeug lösen. Da durch den Vorpressvorgang die Formlinge eventuell in den Saugköpfen dafür zu fest sitzen, kann ein Druckstoß aus dem Saugwerkzeug die Formlinge sicher aus den Saugköpfen lösen, sodass die Übergabe an die Transfereinheit problemlos und zuverlässig für alle Formlinge des Saugwerkzeugs gelingt.

Hierbei kann die Transfereinheit eine Vielzahl auf Form und Anzahl der Formlinge angepasste Kontur auf der dem Saugwerkzeug zugewandten Seite für die Übergabe der Formlinge auf diese Kontur umfassen. Durch den sicheren Sitz der Formlinge auf der Kontur der Transfereinheit kann eine sichere und zuverlässige Übergabe der Formling an die zweite Formstation gelingen.

In einer weiteren Ausführungsform umfasst die erste Formstation des Weiteren eine Sprüheinheit, die zumindest dazu vorgesehen ist, das Saugwerkzeug mit den angeformten Formlingen vor dem Vorpressen während des Fahrwegs des Trägers zur zweiten Position mit einer Flüssigkeit zu besprühen. Dieses Besprühen dient der Reinigung des Saugwerkzeugs von Fasermaterial an Stellen außerhalb der Formlinge. Das Besprühen kann zwar auch nach dem Vorpressen durchgeführt werden, allerdings könnten die Verunreinigungen durch den Vorpressdruck zu stark an Saugwerkzeug haften. Daher ist das Besprühen und damit Reinigen vor dem Vorpressen vorteilhaft.

In einer weiteren Ausführungsform ist die Sprüheinheit des Weiteren dazu ausgestaltet und vorgesehen, die Formlinge nach dem Vorpressen auf dem Fahrweg des Trägers in Richtung der ersten Position mit einer funktionalen Beschichtung zu versehen, vorzugsweise ebenfalls mittels Sprühen. Funktionale Schichten könnten beispielsweise Wachsschichten für eine Feuchtigkeitsbeständigkeit der Formlinge sein. Auch andere Materialien zu anderen Zwecken können aufgetragen werden.

In einer Ausführungsform ist das erste und zweite Saugwerkzeug über den Träger an ein Gasleitungssystem so angeschlossen, dass ein im Gasleitungssystem mittels einer oder mehrerer Vakuumpumpen erzeugter Unterdruck als Saugdruck an den jeweiligen Saugköpfen zum Ansaugen des Fasermaterials zur Verfügung gestellt wird. Die Vakuumpumpe kann dabei an einem vom Saugwerkzeug entfernten Ort positioniert sein und den erzeugten Unterdruck über das Gasleitungssystem an die Saugköpfe verteilen. In einer weiteren Ausführungsform umfasst das Gasleitungssystem auch Druckgasleitungen zur Anlegung von Druckluft an die Saugköpfe. Durch einen Druckluftstoß können die Formteile aus dem Saugwerkzeug ausgeworfen werden, wie beispielsweise für eine Übergabe zu nachfolgenden Prozessen, wie die Übergabe auf die Transfereinheit.

In einer weiteren Ausführungsform wird die Transportvorrichtung durch einen im Raum frei beweglichen Roboterarm mit montierten Träger bereitgestellt. Dadurch kann der Träger bzw. die Anformstation leicht und flexibel zur Vorformstationen und gegebenenfalls auch als Transfereinheit zur zweiten Formstation übergeben werden. So kann der Herstellungsprozess unter anderem je nach benötigter Produktionsrate weiter beschleunigt oder modifiziert werden.

In einer weiteren Ausführungsform umfasst die erste Formstation ein Wechselsystem zum automatischen Auswechseln der Saugwerkzeuge und des Vorpresswerkzeugs, wobei im Wechselsystem ein aus der ersten Formstation heraus beweglicher Werkzeugträger zum Abtransportieren der ausgewechselten Werkzeuge aus der ersten Formstation vorgesehen ist und der Werkzeugträger zum Einfügen neuer Werkzeuge einen umgekehrten Ablauf durchfahren kann. Außerhalb der ersten Formstation kann der Werkzeugträger dann beispielsweise mittels eines Roboter oder manuell entladen und mit anderen Werkzeugen bestückt werden. Ist in diesem Zusammenhang von Werkzeugen die Rede, sind insbesondere die Saugwerkzeuge und das Vorpresswerkzeug gemeint.

In einer weiteren Ausführungsform ist der Träger als Teil der Wechselsystems dazu ausgestaltet, die Saugwerkzeuge und das Vorpresswerkzeug beim Auswechseln aus den Positionen in Anform- und Vorpressstation zu entfernen und an den Werkzeugträger zu übergeben beziehungsweise beim Einfügen neuer Werkzeuge einen umgekehrten Ablauf durchzufahren. Da der Träger die Saugwerkzeuge selbst trägt und in der Zweiten Position zum Vorpresswerkzeug gefahren wird, eignet sich der Träger besonders, um den Werkzeugwechsel durchzuführen.

Hierzu umfasst der Träger beispielsweise zwischen der ersten und zweiten Seite mindestens eine Stirnseite, die mit einem Aufnahme- und Entriegelungsmittel zum Entfernen des Vorpresswerkzeugs aus der Vorpressstation und zum Halten während des Transports des Vorpresswerkzeugs zum Werkzugträger ausgestattet ist. Die Anordnung der Mittel zum Werkzeugwechsel ist gerade auf der Stirnseite vorteilhaft, da diese für den eigentlichen Formprozess nicht verwendet wird und die Aufnahme- und Entriegelungsmittel dort ohne Störung des Formprozesses angeordnet werden können. Mögliche Entriegelungsmittel könnten beispielsweise Mechaniken sein, die nach einem ersten Druck verriegeln und nach einem weiteren Druck entriegeln. Hierzu könnten die Entriegelungsmittel ein oder mehrere Stifte sein, die aus der Stirnseite des Trägers hervorragen. Aufnahmemittel könnten beispielsweise Vertiefungen sein, in die ein oder mehrere Stifte des Vorpresswerkzeugs zu dessen Halterung eingreifen. Ebenfalls möglich wären beispielsweise auch Ver- und Entriegelungen nach einer linearen Bewegung in eine Richtung. Der Fachmann ist in der Lage, geeignete Mechaniken zu wählen.

In einer weiteren Ausführungsform ist die Transportvorrichtung dazu ausgestaltet, für ein Entfernen des Vorpresswerkzeugs aus der Vorformstation den Träger zwischen der ersten und zweiten Position so zu drehen, dass seine Stirnseite dem Vorpresswerkzeug zugewandt ist und danach die Aufnahme- und Entriegelungsmittel des Trägers in Kontakt mit entsprechende Gegenstücken des Vorpresswerkzeugs in Kontakt bringen, so dass das Vorpresswerkzeug aus seiner Halterung in der Vorpressstation herausgelöst wird. Sind einmal die Aufnahme- und Entriegelungsmittel des Träger gewählt, sind die Gegenstücke des Vorpresswerkzeugs entsprechend komplementäre Mechaniken.

In einer weiteren Ausführungsform ist die Transportvorrichtung dazu ausgestaltet, durch eine Fortsetzung der Drehung des Trägers das entfernte Vorpresswerkzeug in den Werkzeugträger abzulegen, vorzugsweise umfasst der Träger einen Vorpresswerkzeug-Auslösemechanismus für das gehaltene Vorpresswerkzeug, damit das Vorpresswerkzeug zur Übernahme durch den Werkzeugträger freigegeben wird.

In einer weiteren Ausführungsform ist der Träger dazu ausgestaltet, nach Positionierung einer der Saugwerkzeuge über dem Werkzeugträger dieses mittels eines Saugwerkzeug-Auslösemechanismus für das gehaltene Saugwerkzeug zur Übernahme durch den Werkzeugträger freizugeben, und durch eine Drehung des Trägers das andere der Saugwerkzeuge oberhalb des bereits übernommenen Saugwerkzeugs zu positionieren und dieses ebenfalls durch den Saugwerkzeug-Auslösemechanismus für das gehaltene Saugwerkzeug zur Übernahme durch den Werkzeugträger freizugeben.

In einer weiteren Ausführungsform umfasst die erste Formstation mindestens ein weiteres Reservoir mit Pulpe und ein Pulpe-Wechselsystem, das dazu ausgestaltet ist, vor Erreichen der ersten Position durch den Träger prozessabhängig das eine oder andere Reservoir mit anderer Pulpe zum Anformen der Formteile bereitzustellen. Hierdurch kann der Faserformprozess variabel gestaltet werden, da Formlinge aus unterschiedlichem Material in einen ununterbrochenen Formprozess hergestellt werden können, indem zu einem zeitlich günstigen Punkt ohne Prozessverzögerung das Reservoir an Pulpe gegen ein anderes Reservoir mit anderer Pulpe getauscht werden kann.

In einer weiteren Ausführungsform umfasst das Pulpe-Wechselsystem dazu Schienen, auf denen die Reservoirs mit Pulpe verschiebbar sind, und ein Antriebsmittel (beispielsweise ein Motor) zum Verschieben der Reservoirs mit Pulpe, das von der Transportvorrichtung prozessabhängig angesteuert wird. Hierbei könnten die Reservoirs selbstfahrend ausgeführt sein. Das ermöglicht einen unkomplizierten und schnelle Reservoir-Wechsel.

In einer weiteren Ausführungsform ist die Transportvorrichtung dazu vorgesehen, den Träger auf dem Fahrweg zwischen erster und zweiter Position so zu verfahren, dass zu einem ersten Zeitpunkt in der ersten Position das Formteil in einem der Saugwerkzeuge aus einem ersten der Reservoirs mit Pulpe angeformt wird und dasselbe Saugwerkzeug zumindest zu einem zweiten Zeitpunkt später als der erste Zeitpunkt vor dem Vorpressen das Formteil zumindest aus einem zweiten der Reservoirs mit anderer Pulpe weiter angeformt wird. So lassen sich Formlinge mit einem Mehrschichtaufbau an unterschiedlichen Fasermaterialien herstellen.

Für alle voranstehend beschriebenen Bewegungen oder Drehungen der jeweiligen Komponenten kann die erste Formstation eine entsprechende Steuerung umfassen. Alternativ kann diese Steuerungsaufgabe auch von der Steuerung der Faserformanlage übernommen werden.

Die Erfindung betrifft des Weiteren eine Faserformanlage zur Herstellung eines Formteils aus Fasermaterial mittels eines in der Faserformanlage ausgeführten Faserformprozess umfassend zumindest eine erfindungsgemäße erste Formstation zum Anformen und Vorformen des Formteils und eine zweite Formstation umfassend eine Heißpressstation zum Endformen des Formteils mittels Heißpressen des vorgeformten Formteils.

Durch die Kombination des Anformens mittels Pulpe und Saugwerkzeug und des Vorpresssens in der ersten Formstation und des Heißpressens in der zweiten Formstation wird auf einfache Weise aus einem Fasermaterial ein Formteil hergestellt, das sehr flexibel je nach Ausgestaltung der Kontur des Saugköpfe Formteile mit unterschiedlichsten Konturen liefern kann. Durch die Kombination des Saugwerkzeugs zum Anformen sowie der Vorform- und Heißpressstationen können die Formteile sehr reproduzierbar und mit einer großen Genauigkeit und Güte bezüglich Form und Schichtdicke der einzelnen Formteilabschnitte hergestellt werden. Die erfindungsgemäße Faserformanlage ist in der Lage, Fasern unterschiedlichster Art zu verarbeiten, sofern diese so in Lösung gebracht werden können, dass eine größere Verklumpung der Fasern in der flüssigen Lösung vor der Verarbeitung vermieden werden kann. Insbesondere können auf diese Weise stabile Formteile einfach, effektiv und flexibel aus umweltverträglich abbaubarem Fasermaterial mit guter Qualität und guter Reproduzierbarkeit hergestellt werden. Durch die Transportvorrichtung der ersten Formstation mit doppeltem Saugwerkzeug können zudem die Formlinge als Produkte effektiv, flexibel, mit guter Qualität und möglichst hohem Durchsatz reproduzierbar hergestellt werden.

Nach erfolgtem Vorpressen mit der ersten Formstation wird das vorgeformte Formteils mittels der Transfereinheit an die Heißpressstation übergeben. Das Heißpressen erfolgt bei hoher Temperatur mit deutlich höherem Druck als das Vorpressen. Mit dem Heißpressen des vorgepressten Formteils wird das Formteil bei weiterer Reduktion des Anteils der flüssigen Lösung im Formteil, beispielsweise auf unter 10% (Gewichtsprozent), vorzugsweise auf circa 7% (Gewichtsprozent), endgeformt, wonach es anschließend stabil und formbeständig ist. Vorzugsweise sind die Heißpress-Unter- und Oberwerkzeuge aus Metall gefertigt. Das Heißpressen wird dabei bei dem Heißpressdruck höher dem Vorpressdruck durchgeführt, beispielsweise bei einem Heißpressdruck zwischen 0,5 N/mm² und 1,5 N/mm², vorzugsweise zwischen 0,8 N/mm² und 1,2 N/mm². Der Heißpressdruck kann dabei für eine Presszeit von weniger als 20s, bevorzugt dabei von mehr als 8s, besonders bevorzugt zwischen 10s und 14s, noch mehr bevorzugt von 12s, angelegt werden. Der Heißpressdruck wird beispielsweise über eine Kolbenstange hydraulisch an die Heißpressstation angelegt, wobei diese Kolbenstange beispielsweise auf das Heißpress-Oberwerkzeug drückt, das dann wiederum auf das ruhende Heißpress-Unterwerkzeug drückt, mit dem Formteil dazwischen. Die Anordnung könnte auch umgekehrt ausgeführt sein. In einer weiteren Ausführungsform ist die Heißpressstation so ausgestaltet, die Heißpressseiten der Heißpressstation auf Temperaturen größer 150°C, vorzugsweise zwischen 180°C und 250°C, aufzuheizen. Damit kann eine Reduktion der Flüssigkeit (oder Feuchtigkeit) im Formteil auf unter 10% (Gewichtsprozent) schnell und zuverlässig erreicht werden.

Durch die Heißpressstation wird auf einfache Weise aus einem vorgeformten und noch leicht variablen Formteil mittels Heißpressen ein für die Weiterbearbeitung endgeformtes Formteil mit deutlich reduziertem Anteil an flüssiger Lösung hergestellt. Die Heißpressstation ermöglicht es, die Formteile besonders reproduzierbar und mit großen Genauigkeit und Güte bezüglich Form und Schichtdicke der einzelnen Formteilabschnitte herzustellen und weiterzuverarbeiten. Insbesondere können auf diese Weise endstabile Formteile einfach, effektiv und flexibel aus umweltverträglich abbaubarem Fasermaterial mit guter Qualität und guter Reproduzierbarkeit hergestellt werden.

In einer Ausführungsform ist dabei die Heißpressstation thermisch von anderen Komponenten der zweiten Formstation entkoppelt, vorzugsweise ist eine aktiv gekühlte Trennung zwischen der Heißpressstation und den anderen Komponenten der zweiten Formstation angeordnet. Diese Maßnahme schütz die anderen Komponenten vor Alterungseffekten und sicher eine zuverlässige Betriebszeit der Faserformanlage.

In einer weiteren Ausführungsform umfasst die zweite Formstation mindestens zwei Heißpressstationen, die prozessabhängig wahlweise die vorgeformten Formlinge der ersten Formstation heißpressen, vorzugsweise dabei mit unterschiedlichen Heißpressparametern. Dies ermöglicht eine weitere Flexibilität bei der Herstellung der Formteile.

In einer weiteren Ausführungsform umfasst die Faserformanlage des Weiteren eine Pulpe-Aufbereitungs- und Nachlieferungseinheit für die Nachlieferung der Pulpe für das Reservoir. Durch eine gleichbleibende Qualität der bereitgestellten Pulpe wird die Reproduzierbarkeit bei der Herstellung der Formlinge weiter verbessert und die Produktqualität kann zuverlässig eingestellt werden.

In einer weiteren Ausführungsform umfasst die Faserformanlage zusätzlich eine Stanzstation zum Abtrennen von überschüssigen Fasermaterial vom endgeformten Formteil. Manche Formteile besitzen aufgrund des Faserformprozesses einen unscharfen Rand, der durch das Abtrennen von Ungleichheiten vergleichmäßigt werden kann. Hierbei kann die Stanzstation bereits in der Faserformanlage integriert sein (inline). Alternativ können aber auch Faserformanlagen mit einer Stanzstation nachgerüstet werden, die dann beispielsweise außerhalb der eigentlichen Maschinenrichtung vom Anformen bis zum Ausgeben der endgeformten Formteile angeordnet sind (offline). In dieser Variante können die Formteile nach dem Heißpressen beispielsweise mit einem Robotertransfer in die Standstation eingeschleust und danach wieder in die ursprüngliche Maschinenrichtung der ursprünglichen Faserformanlage zurückgeschleust werden.

In einer Ausführungsform umfasst die Faserformanlage eine Steuereinheit zur Steuerung zumindest der Anformstation, der Vorformstation und der Heißpressstation sowie anderer Komponenten wie beispielsweise die Stanzstation. Die Steuereinheit kann als Prozessor, separates Computersystem oder webbasiert ausgeführt sein und ist mit den zu steuernden Komponenten der Faserformanlage geeignet verbunden, beispielweise über Datenkabel oder drahtlos mittels WLAN, Funk oder anderer drahtloser Übertragungsmittel.

In einer weiteren Ausführungsform umfasst die Faserformanlage zusätzlich eine Ausgabeeinheit zum Ausgeben des endgeformten Formteils. Die Ausgabeeinheit gibt dabei das Formteils zum Weitertransport oder zur Weiterbearbeitung aus, beispielsweise zu nachfolgenden Schneid-, Beschriftungs-, Bedruckungs-, Stapel- und/oder Packstationen, beispielsweise mit Hilfe eines Transportbandes.

Die Erfindung betrifft des Weiteren ein Verfahren zur Herstellung von Formteilen aus Fasermaterial, vorzugsweise umweltverträglich abbaubarem Fasermaterial, mittels eines Faserformprozesses in einer erfindungsgemäßen Faserformanlage mit einer erfindungsgemäßen ersten Formstation und einer zweiten Formstation umfassend nachfolgende Schritte:
- Anformen des Formteils aus einem Reservoir mit einer Pulpe als flüssige Lösung mit dem Fasermaterial mittels eines ersten und/oder zweiten Saugwerkzeugs als Anformstation der ersten Formstation;
- Vorformen des angeformten Formteils in einer Vorpressstation in der ersten Formstation;
- Endformen des vorgeformten Formteils in der zweiten Formstation mittels Heißpressen; und
- Ausgeben des endgeformten Formteils aus der Faserformanlage.

In einer Ausführungsform des Verfahrens umfasst dieses zusätzlich den Schritt des Abtrennens von überschüssigen Fasermaterial vom endgeformten Formteil durch eine in Maschinenrichtung hinter der zweiten Formstation angeordneten Stanzstation.

Es sei ausdrücklich darauf hingewiesen, dass zum Zwecke der besseren Lesbarkeit "mindestens"-Ausdrücke nach Möglichkeit vermieden wurden. Vielmehr ist ein unbestimmter Artikel ("ein", "zwei" etc.) im Normalfall als "mindestens ein, mindestens zwei, etc." zu verstehen, sofern sich nicht aus dem Kontext ergibt, dass dort "genau" die angegebene Anzahl gemeint ist.

An dieser Stelle sei ebenfalls noch erwähnt, dass im Rahmen der hier vorliegenden Patentanmeldung der Ausdruck "insbesondere" immer so zu verstehen ist, dass mit diesem Ausdruck ein optionales, bevorzugtes Merkmal eingeleitet wird. Der Ausdruck ist demzufolge nicht als "und zwar" und nicht als "nämlich" zu verstehen.

Es versteht sich, dass Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

### Kurze Beschreibung der Figuren

Zusätzlich sind weitere Merkmale, Effekte und Vorteile vorliegender Erfindung anhand anliegender Zeichnung und nachfolgender Beschreibung erläutert. Komponenten, welche in den einzelnen Figuren wenigstens im Wesentlichen hinsichtlich ihrer Funktion übereinstimmen, sind hierbei mit gleichen Bezugszeichen gekennzeichnet, wobei die Komponenten nicht in allen Figuren beziffert und erläutert sein müssen.

Die Zeichnung zeigen:
- Fig.1:: schematische Darstellung einer Ausführungsform der ersten Formstation gemäß vorliegende Erfindung in einem Verfahrensablauf für den Faserformprozess von (a) - (h);
- Fig.2:: schematische Darstellung einer weiteren Ausführungsform der ersten Formstation gemäß vorliegende Erfindung in einem Verfahrensablauf für den automatischen Werkzeugwechsel von (a) - (m);
- Fig.3:: schematische Darstellung einer weiteren Ausführungsform der ersten Formstation gemäß vorliegende Erfindung mit einem Pulpe-Wechselsystem;
- Fig.4:: eine Ausführungsform der erfindungsgemäßen Faserformanlage; und
- Fig.5:: eine Ausführungsform des erfindungsgemäßen Verfahrens zur Herstellung von Formteilen aus Fasermaterial.

### Ausführungsbeispiele

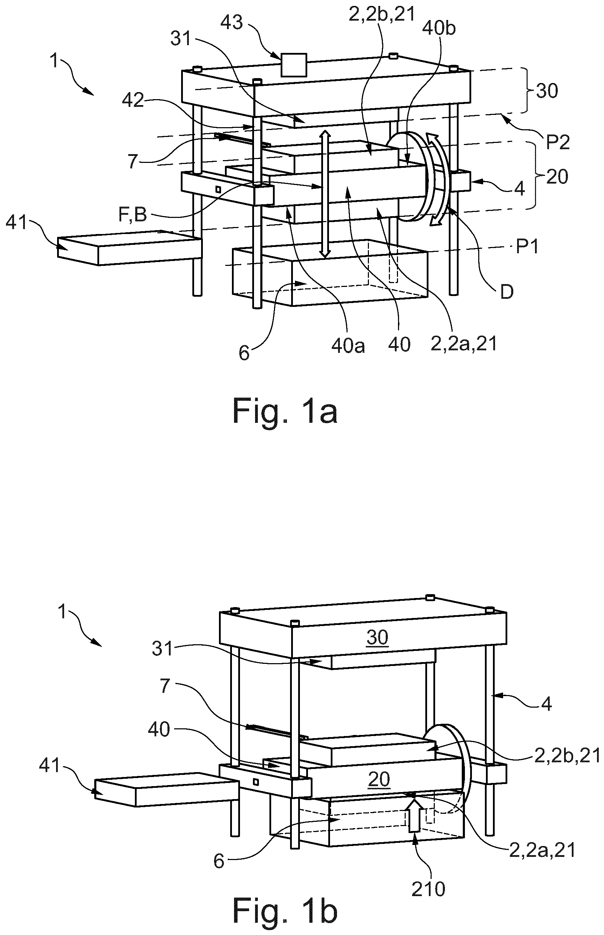

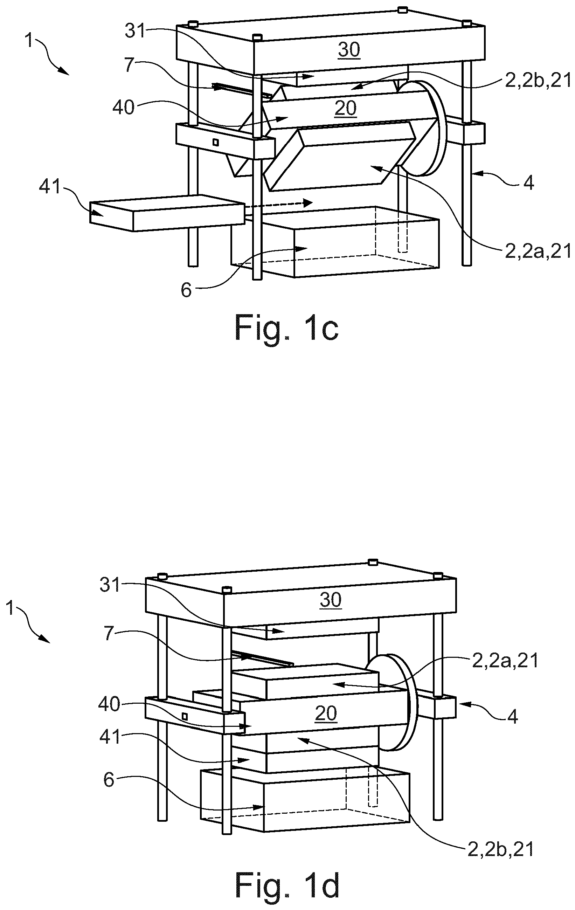

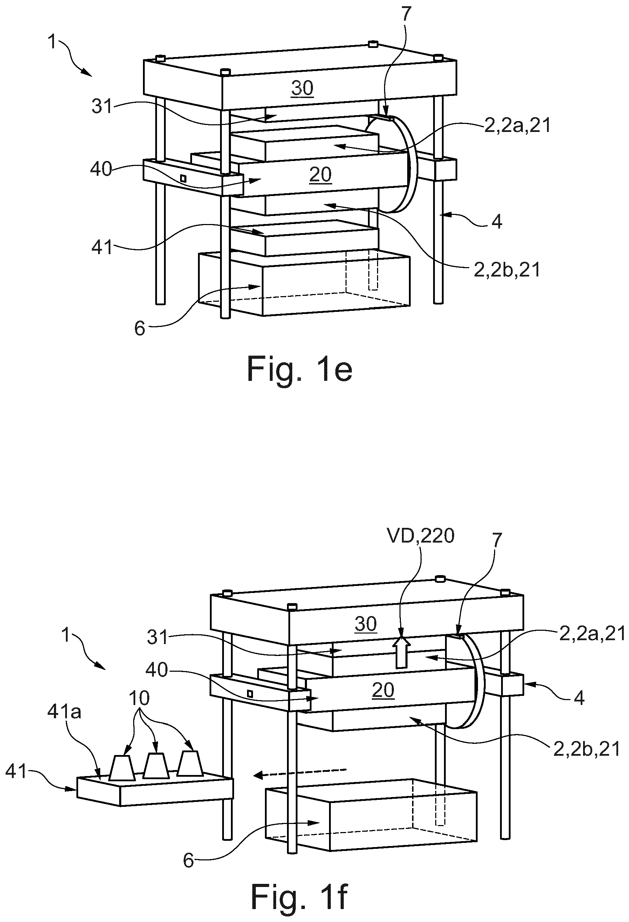

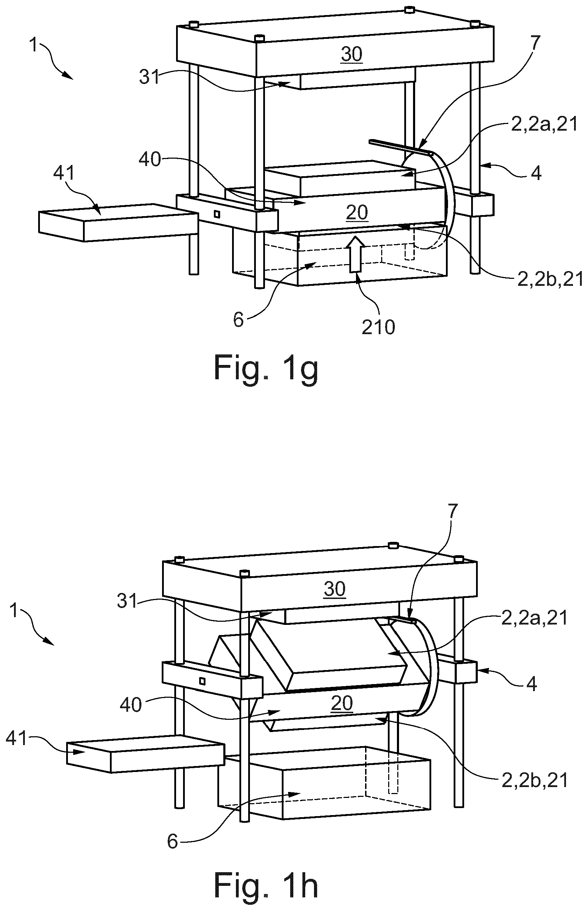

Fig.1 zeigt eine schematische Darstellung einer Ausführungsform der ersten Formstation 1 gemäß vorliegende Erfindung in einem Verfahrensablauf für den Faserformprozess von (a) - (h). Fig.1a - h zeigen die Formstation 1 zum Anformen 210 (siehe Fig.1b, 1g) und Vorformen 220 (siehe Fig.1f) eines Formteils 10 (siehe Fig.1f) aus Fasermaterial umfassend ein Reservoir 6 mit einer Pulpe als flüssige Lösung umfassend das Fasermaterial für das anzuformende Formteil 10, ein erstes und zweites Saugwerkzeug 2, 2a, 2b als Anformstation 20 (zwischen den entsprechend gekennzeichneten Linien) mit jeweils einer Vielzahl an Saugköpfen 21 zum Ansaugen des Fasermaterials für das Anformen 210 des Formteils 10 aus dem Reservoir 6 mit der Pulpe; eine Vorpressstation 30 (zwischen den entsprechend gekennzeichneten Linien) mit einem Vorpresswerkzeug 31 mit einer auf das erste und zweite Saugwerkzeug 2, 2a, 2b angepassten oder anpassbaren Kontur zum Vorformen 220 der in den ersten beziehungsweise zweiten Saugwerkzeugen 2, 2a, 2b befindlichen angeformten Formteile 10, wobei die Formteile 10 mit einem Vorpressdruck VD (siehe Fig.1f) auf das Vorpresswerkzeug 31 gepresst werden, um einen Feuchtigkeitsgehalt im Formteil 10 zu reduzieren und eine Formstabilisierung des Formteils 10 zu bewirken, und eine Transportvorrichtung 4 umfassend einen Träger 40 (hier eine Quader mit einer gewissen Dicke) mit dem auf einer ersten Seite 40a des Trägers 40 angeordnetem ersten Saugwerkzeug 2, 2a und dem auf der gegenüberliegenden zweiten Seite 40b des Trägers 40 angeordneten zweiten Saugwerkzeug 2, 2b, wobei die jeweiligen Saugköpfe 21 auf einer jeweils von Träger 40 abgewandten Seite der Saugwerkzeuge 2, 2a, 2b angeordnet sind, wobei der Träger 40 mittels der Transportvorrichtung 4, vorzugsweise unabhängig voneinander, gedreht (siehe weißer Pfeil D) und zumindest von einer ersten Position P1 zur Aufnahme von Fasermaterial aus dem Reservoir 6 an Pulpe mittels eines der Saugwerkzeuge 2, 2a, 2b zu einer zweite Position P2 zur Ausübung des Vorpressdrucks VD auf die in dem Saugwerkzeug 2, 2a, 2b befindlichen Formteile 10 entlang eines Fahrwegs F bewegt B (weißer Pfeil F, B) werden kann. Hierbei ist das erste und zweite Saugwerkzeug 2, 2a, 2b über den Träger 40 an ein Gasleitungssystem 42 so angeschlossen, dass ein im Gasleitungssystem 40 mittels einer oder mehrerer Vakuumpumpen 43 erzeugter Unterdruck als Saugdruck an den jeweiligen Saugköpfen 21 zum Ansaugen des Fasermaterials zur Verfügung gestellt wird. Der Ort der Vakuumpumpe 43 kann auch anders gewählt werden. Das Gasleitungssystem 42 ist hier in den vertikalen Verfahrschienen der Transportvorrichtung 4 angeordnet. Der Träger 40 wird entlang der Schienen vertikal bewegt B und kann unabhängig davon zwischen der ersten und zweiten Position P1, P2 gedreht D werden.

In Fig.1a umfasst das zweite Saugwerkzeug 2b vorgepresste Formlinge 10. In Fig.1b wird der Träger 40 nach erfolgtem Vorpressen 220 ohne Drehung D des Trägers 40 in die erste Position P1 verfahren, dass nunmehr Formteile 10 aus dem Reservoir 6 mit Pulpe in dem vom Vorpresswerkzeug 31 abgewandten ersten Saugwerkzeug 2a angeformt werden. In Fig.1c wird nach dem erfolgten Anformen 210 der Träger 40 an einer geeigneten Position zwischen der ersten und zweiten Position P1, P2 verfahren und gedreht D, um die vorgepressten Formlinge 10 des zweiten Saugwerkzeugs 2b in Fig.1d an die Transfereinheit 41 der Transportvorrichtung 4 zu übergeben, um sie zur Weitergabe an nachfolgende Prozesse aus dem Fahrweg F des Trägers 40 zu entfernen (siehe Fig.1e, 1f). Hierbei können die vorgepressten Formlinge 10 mittels eines Druckstoßes aus dem Saugwerkzeug 2b ausgestoßen und so an die Transfereinheit 41 übergeben werden. Dabei besprüht unterdessen eine Sprüheinheit 7 das erste Saugwerkzeug 2a mit den angeformten Formlingen 10 vor dem Vorpressen 220 während des Fahrwegs F des Trägers 40 zur zweiten Position P2 mit einer Flüssigkeit zu besprühen. Hierbei wird die Sprüheinheit 7 in einer Seitbewegung über die Oberfläche des ersten Saugwerkzeugs 2a gesteuert. In den Fig.1d und 1e sind nur die jeweiligen Endpositionen dieser Bewegung für die Sprüheinheit 7 gezeigt. Danach erfolgt die erneute Bewegung B des Trägers 40 zur ersten Position, wo nun die Formlinge im zweite Saugwerkzeug 2b angeformt 210 werden, siehe Fig.1g. Nach der in Fig.1h gezeigten Drehung D erfolgen die Schritte wie bereits voranstehend beschrieben zum gleichen Zweck.

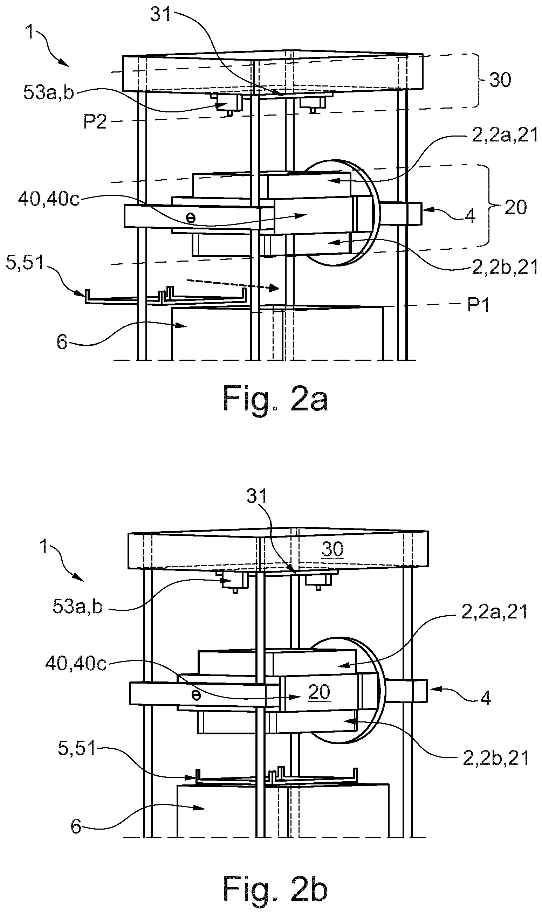

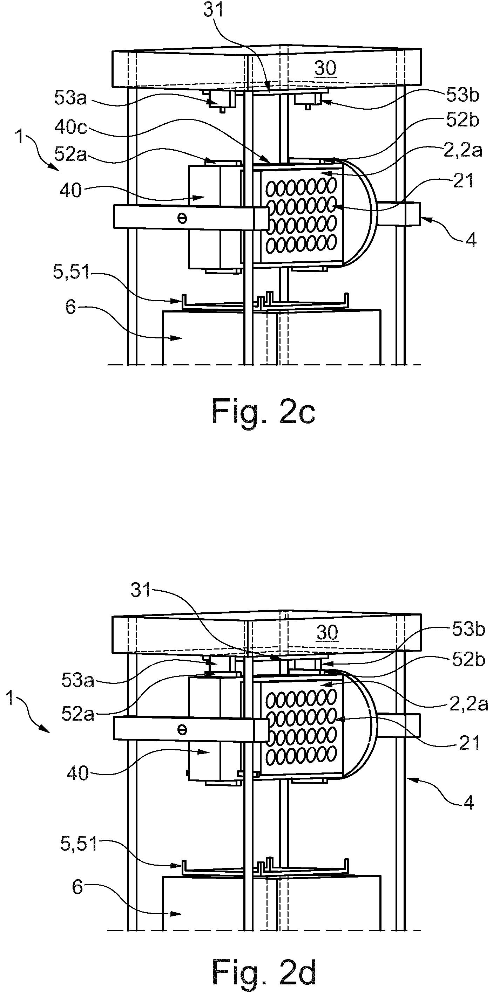

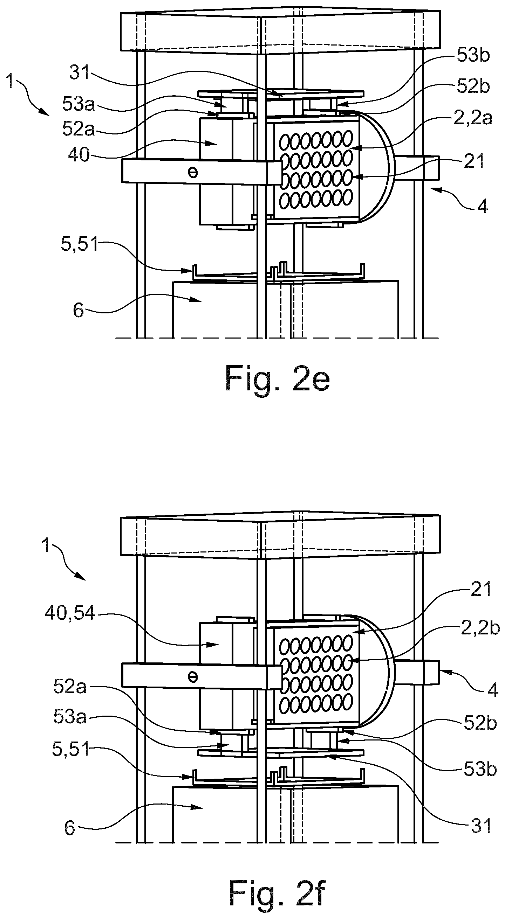

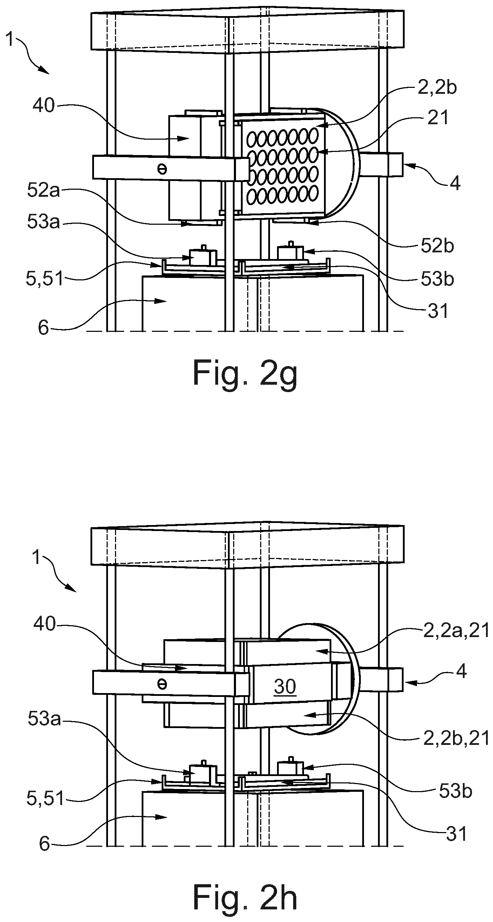

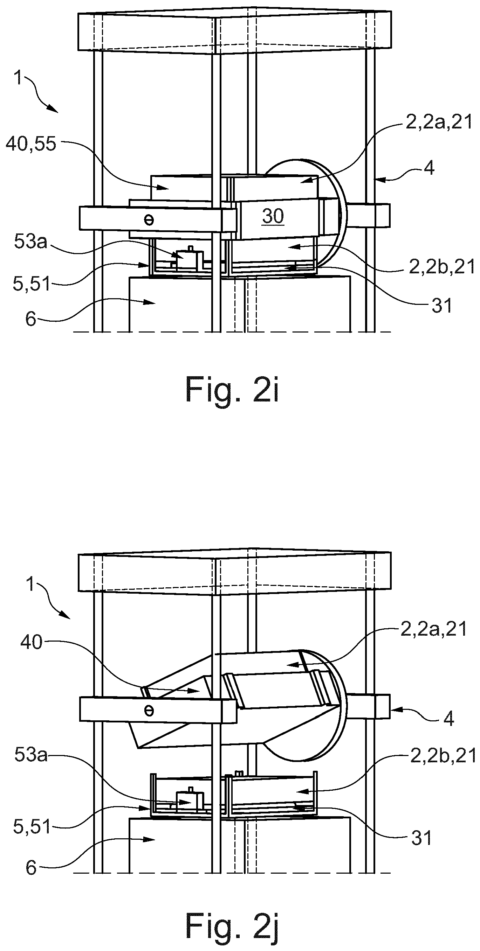

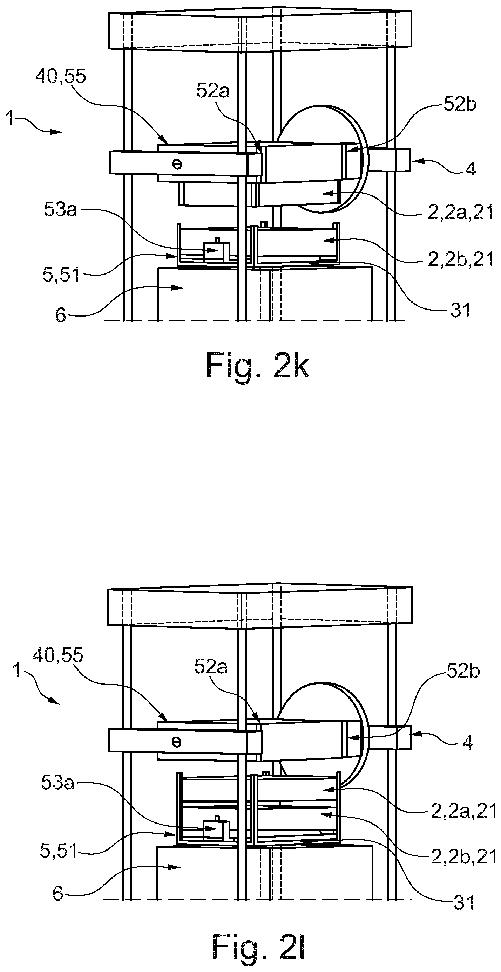

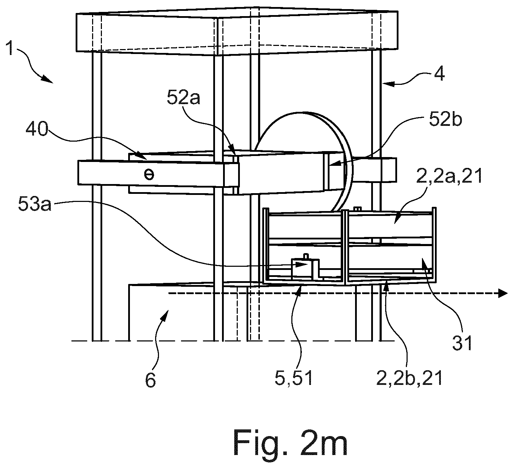

Fig.2 zeigt eine schematische Darstellung einer weiteren Ausführungsform der ersten Formstation 1 gemäß vorliegende Erfindung in einem Verfahrensablauf für den automatischen Werkzeugwechsel von (a) - (m). Die erste Formstation 1 umfasst hier ein Wechselsystem 5 zum automatischen Auswechseln der Saugwerkzeuge 2a, 2b und des Vorpresswerkzeugs 31, wobei im Wechselsystem 5 ein aus der ersten Formstation 1 heraus beweglicher Werkzeugträger 51 zum Abtransportieren der ausgewechselten Werkzeuge 2a, 2b, 31 aus der ersten Formstation 1 vorgesehen ist und der Werkzeugträger 51 zum Einfügen neuer Werkzeuge 2a, 2b, 31 einen umgekehrten Ablauf durchfahren kann. Hierbei ist der Träger 40 als Teil der Wechselsystems 5 dazu ausgestaltet, die Saugwerkzeuge 2a, 2b und das Vorpresswerkzeug 31 beim Auswechseln aus den Positionen in Anform- und Vorpressstation 20, 30 zu entfernen und an den Werkzeugträger 51 zu übergeben beziehungsweise beim Einfügen neuer Werkzeuge 2a, 2b, 31 einen umgekehrten Ablauf durchzufahren. Hierzu umfasst der Träger 40 zwischen der ersten und zweiten Seite 40a, 40b eine Stirnseite 40c, die mit einem Aufnahme- und Entriegelungsmittel 52a, 52b zum Entfernen des Vorpresswerkzeugs 31 aus der Vorpressstation 30 und zum Halten während des Transports des Vorpresswerkzeugs 31 zum Werkzugträger 51 ausgestattet ist.

In Fig.2a, 2b fährt der Werkzeugträger 51 in seine Position unterhalb des Trägers, um die Werkzeuge 2a, 2b und 31 aufzunehmen. Hierzu wird der Träger 40 zwischen der ersten und zweiten Position P1, P2 so gedreht, dass seine Stirnseite 40c dem Vorpresswerkzeug 31 zugewandt ist (Fig.2c). Danach fährt der Träger 40 in Richtung der zweiten Position P2 und bringt seine Aufnahme- und Entriegelungsmittel 52a, 52b in Kontakt mit entsprechende Gegenstücken 53a, 53b des Vorpresswerkzeugs 31, so dass das Vorpresswerkzeug 31 aus seiner Halterung in der Vorpressstation 30 herausgelöst wird (Fig.2d, 2e). Danach dreht sich der Träger 40 um eine halbe Drehung in Richtung der Werkzeugträgers 51 (Fig.2f), um das entfernte Vorpresswerkzeug 31 in den Werkzeugträger 51 abzulegen (Fig.2g). Hierbei umfasst der Träger 40 einen Vorpresswerkzeug-Auslösemechanismus 54 für das gehaltene Vorpresswerkzeug 31, damit das Vorpresswerkzeug 31 zur Übernahme durch den Werkzeugträger 51 freigegeben wird. Mit einer weiteren Drehung wird das zweite Saugwerkzeuge 2b über dem Werkzeugträger 51 positioniert und mittels eines Saugwerkzeug-Auslösemechanismus 55 zur Übernahme durch den Werkzeugträger 51 freizugeben (Fig.2h, 2i). Durch eine weitere Drehung D des Trägers 40 wird nun das erste Saugwerkzeuge 2a oberhalb des bereits übernommenen Saugwerkzeugs 2b positionieren und dieses ebenfalls durch den Saugwerkzeug-Auslösemechanismus 55 zur Übernahme durch den Werkzeugträger 51 freizugeben (Fig.2j - 2l). Anschließend wird der Werkzeugträger 51 mit den Werkzeugen 2a, 2b und 31 aus der ersten Formstation 1 zum Austausch der Werkzeuge 2a, 2b, 31 herausbewegt, siehe Pfeil (Fig.2m).

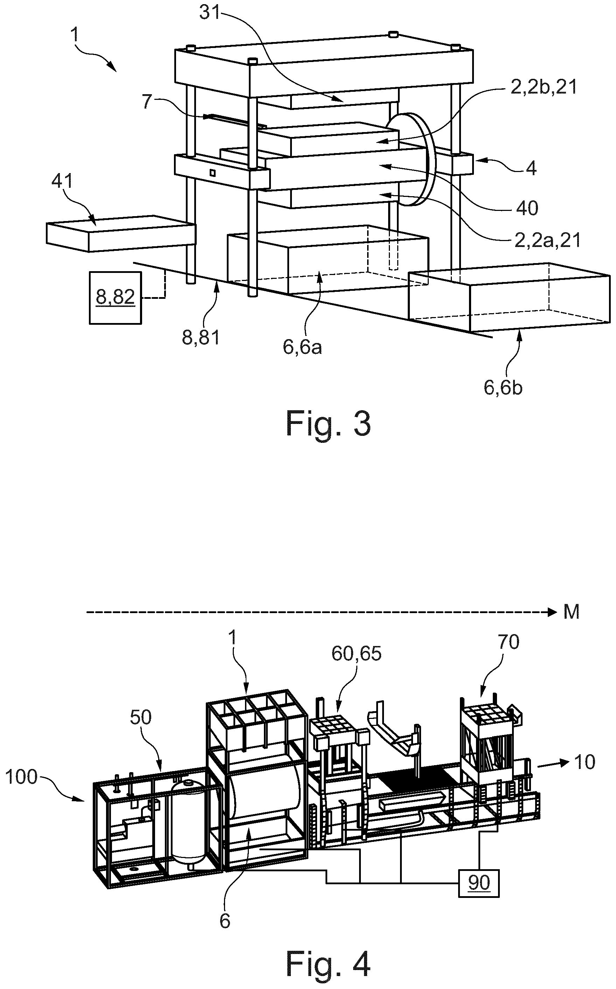

Fig.3 zeigt eine schematische Darstellung einer weiteren Ausführungsform der ersten Formstation 1 gemäß vorliegende Erfindung mit einem Pulpe-Wechselsystem 8, wobei die erste Formstation 1 mindestens ein weiteres Reservoir 6, 6b mit Pulpe umfasst, wobei das Pulpe-Wechselsystem 8 das dazu ausgestaltet ist, vor Erreichen der ersten Position P1 durch den Träger 40 prozessabhängig das eine oder andere Reservoir 6, 6a, 6b mit anderer Pulpe zum Anformen der Formteile 10 bereitzustellen. In dieser Ausführungsform umfasst das Pulpe-Wechselsystem 8 dazu Schienen 81, auf denen die Reservoirs 6, 6a, 6b mit Pulpe verschiebbar sind, und ein Antriebsmittel 82 zum Verschieben der Reservoirs 6, 6a, 6b mit Pulpe, das von der Transportvorrichtung 4 bzw. er ersten Formstation 1 oder der Faserformanlage 100 prozessabhängig angesteuert wird. Die Transportvorrichtung 4 bzw. die Steuerung der ersten Formstation oder der Faserformanlage sind dazu vorgesehen, den Träger 40 auf dem Fahrweg F zwischen erster und zweiter Position P1, P2 so zu verfahren, dass zu einem ersten Zeitpunkt in der ersten Position P1 das Formteil 10 in einem der Saugwerkzeuge 2a aus einem ersten der Reservoirs 6, 6a mit Pulpe angeformt wird und dasselbe Saugwerkzeug 2a zumindest zu einem zweiten Zeitpunkt später als der erste Zeitpunkt vor dem Vorpressen 220 das Formteil 10 zumindest aus einem zweiten der Reservoirs 6, 6b mit anderer Pulpe weiter angeformt wird. Gleiches ist auch mit dem Saugwerkzeug 2b möglich.

Fig.4 zeigt eine Ausführungsform der erfindungsgemäßen Faserformanlage 100 zur Herstellung eines Formteils 10 aus Fasermaterial mittels eines in der Faserformanlage 100 ausgeführten Faserformprozess umfassend eine erfindungsgemäße erste Formstation 1 zum Anformen und Vorformen der Formteiles 10 und eine zweite Formstation 60 umfassend eine Heißpressstation 65 zum Endformen der Formteile 10 mittels Heißpressen der vorgeformten Formteile 10. Die Faserformanlage 100 umfasst des Weiteren eine Pulpe-Aufbereitungs- und Nachlieferungseinheit 50 für die Nachlieferung der Pulpe für das Reservoir 6, das hier am Boden der ersten Formstation 1 ersichtlich ist. Hierbei kann die Heißpressstation 65 thermisch von anderen Komponenten der zweiten Formstation 60 entkoppelt sein, vorzugsweise ist eine aktiv gekühlte Trennung zwischen der Heißpressstation 65 und den anderen Komponenten der zweiten Formstation 60 angeordnet. Die zweite Formstation 60 kann außerdem mindestens zwei Heißpressstationen 65 umfassen (hier nicht im Detail gezeigt), die prozessabhängig wahlweise die vorgeformten Formlinge 10 der ersten Formstation 1 heißpressen, vorzugsweise dabei mit unterschiedlichen Heißpressparametern. Die Faserformanlage 100 umfasst hier zusätzlich eine Stanzstation 70 zum Abtrennen von überschüssigen Fasermaterial vom endgeformten Formteil 10, die in Maschinenrichtung M im Prozess nachfolgend (hinter) zur zweiten Formstation 60 angeordnet ist. Des Weiteren umfasst die Faserformanlage 100 eine Steuerung 90.

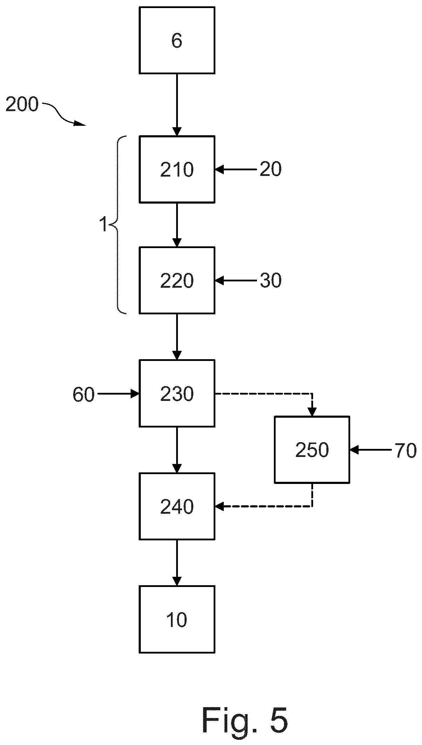

Fig.5 zeigt eine Ausführungsform des erfindungsgemäßen Verfahrens 200 zur Herstellung von Formteilen 10 aus Fasermaterial mittels eines Faserformprozesses in einer erfindungsgemäßen Faserformanlage 100 mit einer erfindungsgemäßen ersten Formstation 1 und einer zweiten Formstation umfassend die nachfolgende Schritte des Anformens 210 des Formteils 10 aus einem Reservoir 6 mit einer Pulpe als flüssige Lösung mit dem Fasermaterial mittels eines ersten und/oder zweiten Saugwerkzeugs 2, 2a, 2b als Anformstation 20 der ersten Formstation 1; des Vorformens 220 des angeformten Formteils 10 in einer Vorpressstation 30 in der ersten Formstation 1; des Endformens 230 des vorgeformten Formteils 10 in der zweiten Formstation 60 mittels Heißpressen; und letztlich des Ausgebens 240 des endgeformten Formteils 10 aus der Faserformanlage 100. Hierbei kann innerhalb der Faserformanlage ein Abtrennen 250 von überschüssigen Fasermaterial vom endgeformten Formteil 10 durch eine in Maschinenrichtung hinter der zweiten Formstation 60 angeordneten Stanzstation 70 erfolgen.

Es versteht sich, dass es sich bei dem vorstehend erläuterten Ausführungsbeispiel lediglich um eine erste Ausgestaltung der vorliegenden Erfindung handelt. Insofern beschränkt sich die Ausgestaltung der Erfindung nicht auf dieses Ausführungsbeispiel.

### Liste der verwendeten Bezugszeichen

- 1: erste Formstation
- 2, 2a: erstes Saugwerkzeug
- 2, 2b: zweites Saugwerkzeug
- 10: Formteil aus Fasermaterial
- 20: Anformstation
- 21: Saugkopf
- 30: Vorpressstation
- 31: Vorpress-Unterwerkzeug
- 4: Transportvorrichtung
- 40: Träger
- 40a: erste Seite des Trägers
- 40b: zweite Seite des Trägers
- 41: Transfereinheit
- 41a: dem Saugwerkzeug zugewandten Seite der Transfereinheit
- 42: Gasleitungssystem
- 43: Vakuumpumpe
- 5: Wechselsystem
- 51: Werkzeugträger
- 52a, 52b: Aufnahme- und Entriegelungsmittel des Trägers
- 53a, 53b: entsprechende Gegenstücke des Vorpresswerkzeugs zu den Aufnahme- und Entriegelungsmittel des Trägers
- 54: Vorpresswerkzeug-Auslösemechanismus des Trägers
- 55: Saugwerkzeug-Auslösemechanismus des Trägers
- 6: Reservoir mit Pulpe
- 6a, 6b: erstes bzw. zweites Reservoir mit Pulpe
- 7: Sprüheinheit
- 8: Pulpe-Wechselsystem
- 81: Schienen des Pulpe-Wechselsystems
- 82: Antriebsmittel des Pulpe-Wechselsystems

- 100: Faserformanlage
- 50: Pulpe-Aufbereitungs - und Nachlieferungseinheit
- 60: zweite Formstation
- 65: Heißpressstation der zweiten Formstation
- 70: Stanzstation
- 90: Steuerung der Faserformanlage

- 200: Verfahren zur Herstellung von Formteilen aus Fasermaterial mittels eines Faserformprozesses in einer Faserformanlage
- 210: Anformen des Formteils aus einem Reservoir mit einer Pulpe
- 220: Vorformen des angeformten Formteils in einer Vorpressstation
- 230: Endformen des vorgeformten Formteils in einer zweiten Formstation
- 240: Ausgeben des endgeformten Formteils aus der Faserformanlage
- 250: Abtrennen von überschüssigen Fasermaterial vom endgeformten Formteil

- B: Bewegen des Trägers entlang des Fahrwegs
- D: Drehen des Trägers
- F: Fahrweg
- M: Maschinenrichtung
- P1: erste Position
- P2: zweite Position
- VD: Vorpressdruck

## Patentansprüche

1. Eine erste Formstation (1) für eine Faserformanlage (100) zum Anformen (210) und Vorformen (220) eines Formteils (10) aus Fasermaterial, vorzugsweise umweltverträglich abbaubaren Fasermaterial, in einem Faserformprozess umfassend:
- ein Reservoir (6) mit einer Pulpe als flüssige Lösung umfassend das Fasermaterial für das anzuformende Formteil (10);
- ein erstes und zweites Saugwerkzeug (2, 2a, 2b) als Anformstation (20) mit jeweils einer Vielzahl an Saugköpfen (21) zum Ansaugen des Fasermaterials für das Anformen (210) des Formteils (10) aus dem Reservoir (6) mit der Pulpe;
- eine Vorpressstation (30) mit einem Vorpresswerkzeug (31) mit einer auf das erste und zweite Saugwerkzeug (2, 2a, 2b) angepassten oder anpassbaren Kontur zum Vorformen (220) der in den ersten beziehungsweise zweiten Saugwerkzeugen (2, 2a, 2b) befindlichen angeformten Formteile (10), wobei die Formteile (10) mit einem Vorpressdruck (VD) auf das Vorpresswerkzeug (31) gepresst werden, um einen Feuchtigkeitsgehalt im Formteil (10) zu reduzieren und eine Formstabilisierung des Formteils (10) zu bewirken; und
- eine Transportvorrichtung (4) umfassend einen Träger (40) mit dem auf einer ersten Seite (40a) des Trägers (40) angeordnetem ersten Saugwerkzeug (2, 2a) und dem auf der gegenüberliegenden zweiten Seite (40b) des Trägers (40) angeordneten zweiten Saugwerkzeug (2, 2b), wobei die jeweiligen Saugköpfe (21) auf einer jeweils von Träger (40) abgewandten Seite der Saugwerkzeuge (2, 2a, 2b) angeordnet sind, wobei der Träger (40) mittels der Transportvorrichtung (4), vorzugsweise unabhängig voneinander, gedreht (D) und zumindest von einer ersten Position (P1) zur Aufnahme von Fasermaterial aus dem Reservoir (6) an Pulpe mittels eines der Saugwerkzeuge (2, 2a, 2b) zu einer zweite Position (P2) zur Ausübung des Vorpressdrucks (VD) auf die in dem Saugwerkzeug (2, 2a, 2b) befindlichen Formteile (10) entlang eines Fahrwegs (F) bewegt (B) werden kann.

2. Die erste Formstation (1) nach Anspruch 1,
**dadurch gekennzeichnet,**
**dass** die Transportvorrichtung (4) dazu vorgesehen ist, den Träger (40) nach erfolgtem Vorpressen (220) mit einem der Saugwerkzeuge (2, 2a, 2b) in der zweiten Position (P2) ohne Drehung (D) des Trägers (40) in die erste Position (P1) zu verfahren, dass nunmehr Formteile (10) aus dem Reservoir (6) mit Pulpe in dem beim erfolgten Vorpressen (220) von dem Vorpresswerkzeug (31) abgewandten Saugwerkzeug (2, 2a, 2b) angeformt werden können.

3. Die erste Formstation (1) nach Anspruch 1 oder 2,
**dadurch gekennzeichnet,**
**dass** die Transportvorrichtung (4) dazu vorgesehen ist, nach dem erfolgten Vorpressen (220) der Formteile (10) mit dem einen der Saugwerkzeuge (2, 2a, 2b) und nach dem erfolgten Anformen (210) der Formteile (10) in dem anderen der Saugwerkzeuge (2, 2a, 2b) den Träger (40) an einer geeigneten Position zwischen der ersten und zweiten Position (P1, P2) zu drehen (D) und die vorgepressten Formteile (10) an eine Transfereinheit (41) der Transportvorrichtung (4) zu übergeben, um sie zur Weitergabe an nachfolgende Prozesse aus dem Fahrweg (F) des Trägers (40) zu entfernen.

4. Die erste Formstation (1) nach Anspruch 3,
**dadurch gekennzeichnet,**
**dass** die Transportvorrichtung (4) dazu vorgesehen ist, die vorgepressten Formlinge (10) mittels eines Druckstoßes aus dem Saugwerkzeug (2, 2a, 2b) auszustoßen und so an die Transfereinheit (41) zu übergeben.

5. Die erste Formstation (1) nach Anspruch 3 oder 4,
**dadurch gekennzeichnet,**
**dass** die Transfereinheit (41) eine auf Form und Anzahl der Formlinge (10) angepasste Kontur auf der dem Saugwerkzeug (2, 2a, 2b) zugewandten Seite (41a) für die Übergabe der Formlinge (10) auf diese Kontur umfasst.

6. Die erste Formstation (1) nach einem der voranstehenden Ansprüche,
**dadurch gekennzeichnet,**
**dass** die erste Formstation (1) des Weiteren eine Sprüheinheit (7) umfasst, die zumindest dazu vorgesehen ist, das Saugwerkzeug (2, 2a, 2b) mit den angeformten Formlingen (10) vor dem Vorpressen (220) während des Fahrwegs (F) des Trägers (40) zur zweiten Position (P2) mit einer Flüssigkeit zu besprühen.

7. Die erste Formstation (1) nach Anspruch 6,
**dadurch gekennzeichnet,**
**dass** die Sprüheinheit (7) des Weiteren dazu ausgestaltet und vorgesehen ist, die Formlinge (10) nach dem Vorpressen (220) auf dem Fahrweg (F) des Trägers (40) in Richtung der ersten Position (P1) mit einer funktionalen Beschichtung zu versehen, vorzugsweise ebenfalls mittels Sprühen.

8. Die erste Formstation (1) nach einem der voranstehenden Ansprüche,
**dadurch gekennzeichnet,**
**dass** das erste und zweite Saugwerkzeug (2, 2a, 2b) über den Träger (40) an ein Gasleitungssystem (42) so angeschlossen ist, dass ein im Gasleitungssystem (40) mittels einer oder mehrerer Vakuumpumpen (43) erzeugter Unterdruck als Saugdruck an den jeweiligen Saugköpfen (21) zum Ansaugen des Fasermaterials zur Verfügung gestellt wird.

9. Die erste Formstation (1) nach einem der voranstehenden Ansprüchen,
**dadurch gekennzeichnet,**
**dass** die Transportvorrichtung (4) durch einen im Raum frei beweglichen Roboterarm mit montierten Träger (40) bereitgestellt wird.

10. Die erste Formstation (1) nach einem der voranstehenden Ansprüche,
**dadurch gekennzeichnet,**
**dass** die auf das erste und zweite Saugwerkzeug (2, 2a, 2b) angepasste Kontur des Vorpresswerkzeugs (31) zumindest zum Teil aus einem Elastomer, vorzugsweise Silikon, gefertigt ist, oder
**dass** das Vorpresswerkzeug (31) eine flexible Membran zum Überdecken der Formlinge (10) umfasst und der Vorpressdruck (VD) als Gasdruck an die Membran angelegt wird, die daraufhin auf die Außenkontur dar Formlinge (10) gepresst wird.

11. Die erste Formstation (1) nach einem der voranstehenden Ansprüche,
**dadurch gekennzeichnet,**
**dass** die erste Formstation (1) ein Wechselsystem (5) zum automatischen Auswechseln der Saugwerkzeuge (2, 2a, 2b) und des Vorpresswerkzeugs (31) umfasst, wobei im Wechselsystem (5) ein aus der ersten Formstation (1) heraus beweglicher Werkzeugträger (51) zum Abtransportieren der ausgewechselten Werkzeuge (2, 2a, 2b, 31) aus der ersten Formstation (1) vorgesehen ist und der Werkzeugträger (51) zum Einfügen neuer Werkzeuge (2, 2a, 2b, 31) einen umgekehrten Ablauf durchfahren kann.

12. Die erste Formstation (1) nach Anspruch 11,
**dadurch gekennzeichnet,**
**dass** der Träger (40) als Teil der Wechselsystems (5) dazu ausgestaltet ist, die Saugwerkzeuge (2, 2a, 2b) und das Vorpresswerkzeug (31) beim Auswechseln aus den Positionen in Anform- und Vorpressstation (20, 30) zu entfernen und an den Werkzeugträger (51) zu übergeben beziehungsweise beim Einfügen neuer Werkzeuge (2, 2a, 2b, 31) einen umgekehrten Ablauf durchzufahren.

13. Die erste Formstation (1) nach Anspruch 12,
**dadurch gekennzeichnet,**
**dass** der Träger (40) zwischen der ersten und zweiten Seite (40a, 40b) mindestens eine Stirnseite (40c) umfasst, die mit einem Aufnahme- und Entriegelungsmittel (52a, 52b) zum Entfernen des Vorpresswerkzeugs (31) aus der Vorpressstation (30) und zum Halten während des Transports des Vorpresswerkzeugs (31) zum Werkzugträger (51) ausgestattet ist.

14. Die erste Formstation (1) nach Anspruch 13,
**dadurch gekennzeichnet,**
**dass** die Transportvorrichtung (4) dazu ausgestaltet ist, für ein Entfernen des Vorpresswerkzeugs (31) aus der Vorpressstation (30) den Träger (40) zwischen der ersten und zweiten Position (P1, P2) so zu drehen, dass seine Stirnseite (40c) dem Vorpresswerkzeug (31) zugewandt ist und danach die Aufnahme- und Entriegelungsmittel (52a, 52b) des Trägers (40) in Kontakt mit entsprechende Gegenstücken (53a, 53b) des Vorpresswerkzeugs (31) in Kontakt bringen, so dass das Vorpresswerkzeug (31) aus seiner Halterung in der Vorpressstation (30) herausgelöst wird.

15. Die erste Formstation (1) nach Anspruch 14,
**dadurch gekennzeichnet,**
**dass** die Transportvorrichtung (4) des Weiteren dazu ausgestaltet ist, durch eine Fortsetzung der Drehung (D) des Trägers (40) das entfernte Vorpresswerkzeug (31) in den Werkzeugträger (51) abzulegen, vorzugsweise umfasst der Träger (40) einen Vorpresswerkzeug-Auslösemechanismus (54) für das gehaltene Vorpresswerkzeug (31), damit das Vorpresswerkzeug (31) zur Übernahme durch den Werkzeugträger (51) freigegeben wird.

16. Die erste Formstation (1) nach einem der Ansprüche 11 bis 15,
**dadurch gekennzeichnet,**
**dass** der Träger (40) des Weiteren dazu ausgestaltet ist, nach Positionierung einer der Saugwerkzeuge (2, 2a, 2b) über dem Werkzeugträger (51) dieses mittels eines Saugwerkzeug-Auslösemechanismus (55) für das gehaltene Saugwerkzeug (2, 2a, 2b) zur Übernahme durch den Werkzeugträger (51) freizugeben, und durch eine Drehung (D) des Trägers (40) das andere der Saugwerkzeuge (2, 2a, 2b) oberhalb des bereits übernommenen Saugwerkzeugs (2, 2a, 2b) zu positionieren und dieses ebenfalls durch den Saugwerkzeug-Auslösemechanismus (55) für das gehaltene Saugwerkzeug (2, 2a, 2b) zur Übernahme durch den Werkzeugträger (51) freizugeben.

17. Die erste Formstation (1) nach einem der voranstehenden Ansprüche,
**dadurch gekennzeichnet,**
**dass** die erste Formstation (1) mindestens ein weiteres Reservoir (6, 6b) mit Pulpe und ein Pulpe-Wechselsystem (8) umfasst, das dazu ausgestaltet ist, vor Erreichen der ersten Position (P1) durch den Träger (40) prozessabhängig das eine oder andere Reservoir (6, 6a, 6b) mit anderer Pulpe zum Anformen der Formteile (10) bereitzustellen.

18. Die erste Formstation (1) nach Anspruch 17,
**dadurch gekennzeichnet,**
**dass** das Pulpe-Wechselsystem (8) dazu Schienen (81) umfasst, auf denen die Reservoirs (6, 6a, 6b) mit Pulpe verschiebbar sind, und ein Antriebsmittel (82) zum Verschieben der Reservoirs (6, 6a, 6b) mit Pulpe, das von der Transportvorrichtung (4) prozessabhängig angesteuert wird.

19. Die erste Formstation (1) nach Anspruch 17 oder 18,
**dadurch gekennzeichnet,**
**dass** die Transportvorrichtung (4) dazu vorgesehen ist, den Träger (40) auf dem Fahrweg (F) zwischen erster und zweiter Position (P1, P2) so zu verfahren, dass zu einem ersten Zeitpunkt in der ersten Position (P1) das Formteil (10) in einem der Saugwerkzeuge (2, 2a, 2b) aus einem ersten der Reservoirs (6, 6a) mit Pulpe angeformt wird und das in dem einen der Saugwerkzeuge (2, 2a, 2b) zumindest zu einem zweiten Zeitpunkt der später ist als der erste Zeitpunkt, und vor dem Vorpressen (220) ist, das angeformte Formteil (10) zumindest aus einem zweiten der Reservoirs (6, 6b) mit anderer Pulpe weiter angeformt wird.

20. Eine Faserformanlage (100) zur Herstellung eines Formteils (10) aus Fasermaterial mittels eines in der Faserformanlage (100) ausgeführten Faserformprozess umfassend zumindest eine erste Formstation (1) nach einem der Ansprüche 1 bis 19 zum Anformen und Vorformen des Formteils (10) und eine zweite Formstation (60) umfassend eine Heißpressstation (65) zum Endformen des Formteils (10) mittels Heißpressen des vorgeformten Formteils (10).

21. Die Faserformanlage (100) nach Anspruch 20,
**dadurch gekennzeichnet,**
**dass** die Faserformanlage (100) des Weiteren eine Pulpe-Aufbereitungs- und Nachlieferungseinheit (50) für die Nachlieferung der Pulpe für das Reservoir (6) umfasst.

22. Die Faserformanlage (100) nach Anspruch 20 oder 21,
**dadurch gekennzeichnet,**
**dass** die Heißpressstation (65) thermisch von anderen Komponenten der zweiten Formstation (60) entkoppelt ist, vorzugsweise ist eine aktiv gekühlte Trennung zwischen der Heißpressstation (65) und den anderen Komponenten der zweiten Formstation (60) angeordnet.

23. Die Faserformanlage (100) nach Anspruch 20 bis 22,
**dadurch gekennzeichnet,**
**dass** die zweite Formstation (60) mindestens zwei Heißpressstationen (65) umfasst, die prozessabhängig wahlweise die vorgeformten Formlinge (10) der ersten Formstation (1) heißpressen, vorzugsweise dabei mit unterschiedlichen Heißpressparametern.

24. Die Faserformanlage (100) nach Anspruch 20 bis 23,
**dadurch gekennzeichnet,**
**dass** die Faserformanlage (100) zusätzlich eine Stanzstation (70) zum Abtrennen von überschüssigen Fasermaterial vom endgeformten Formteil (10) umfasst.

25. Ein Verfahren (200) zur Herstellung von Formteilen (10) aus Fasermaterial, vorzugsweise umweltverträglich abbaubarem Fasermaterial, mittels eines Faserformprozesses in einer Faserformanlage (100) nach einem der Ansprüche 20 bis 24 mit einer ersten Formstation (1) nach einem der Ansprüche 1 - 19 und einer zweiten Formstation (60) umfassend nachfolgende Schritte:
- Anformen (210) des Formteils (10) aus einem Reservoir (6, 6a, 6b) mit einer Pulpe als flüssige Lösung mit dem Fasermaterial mittels eines ersten und/oder zweiten Saugwerkzeugs (2, 2a, 2b) als Anformstation (20) der ersten Formstation (1);
- Vorformen (220) des angeformten Formteils (10) in einer Vorpressstation (30) in der ersten Formstation (1);
- Endformen (230) des vorgeformten Formteils (10) in der zweiten Formstation (60) mittels Heißpressen; und
- Ausgeben (240) des endgeformten Formteils (10) aus der Faserformanlage (100).

26. Das Verfahren (200) nach Anspruch 25, umfassend zusätzlich den Schritt des Abtrennens (250) von überschüssigen Fasermaterial vom endgeformten Formteil (10) durch eine in Maschinenrichtung hinter der zweiten Formstation (60) angeordneten Stanzstation (70).

## Claims

1. A first molding station (1) for a fiber molding machine (100) for molding (210) and pre-molding (220) a molded part (10) from fiber material, preferably sustainable, degradable fiber material, in a fiber molding process comprising:
- a reservoir (6) having a pulp as a liquid solution comprising the fiber material for the molded part (10) to be molded;
- a first and second suction tool (2, 2a, 2b) as a molding station (20), each having a plurality of suction heads (21) for suctioning the fiber material for molding (210) the molded part (10) from the reservoir (6) having the pulp;
- a pre-pressing station (30) having a pre-pressing tool (31) comprising a contour adapted or adaptable to the first and second suction tools (2, 2a, 2b) for pre-molding (220) the molded parts (10) located in the first and second suction tools (2, 2a, 2b), wherein the molded parts (10) are pressed onto the pre-pressing tool (31) via a pre-pressing pressure (VD) in order to reduce moisture content in the molded part (10) and to stabilize the shape of the molded part (10); and
- a transport device (4) comprising a carrier (40) having the first suction tool (2, 2a) arranged on a first side (40a) of the carrier (40) and the second suction tool (2, 2b) arranged on the opposite second side (40b) of the carrier (40), the respective suction heads (21) being arranged on a respective side of the suction tools (2, 2a, 2b) facing away from the carrier (40), wherein the carrier (40) can be rotated (D) by means of the transport device (4), preferably independently of one another, and moved (B) along a path (F) at least from a first position (P1) for receiving fiber material from the pulp reservoir (6) by means of one of the suction tools (2, 2a, 2b) to a second position (P2) for exerting the pre-pressing pressure (VD) on the molded parts (10) located in the suction tool (2, 2a, 2b).

2. The first molding station (1) according to claim 1,
**characterized in that**
the transport device (4) is intended to move the carrier (40) into the first position (P1) after pre-pressing (220), one of the suction tools (2, 2a, 2b) being in the second position (P2) without rotation (D) of the carrier (40), so that molded parts (10) from the pulp reservoir (6) can now be molded in the suction tool (2, 2a, 2b) facing away from the pre-pressing tool (31) during pre-pressing (220).

3. The first molding station (1) according to claim 1 or 2,
**characterized in that**
the transport device (4) is intended, after pre-pressing (220) of the molded parts (10) has taken place via one of the suction tools (2, 2a, 2b) and after the molding (210) of the molded parts (10) has taken place in the other of the suction tools (2, 2a, 2b), to rotate (D) the carrier (40) at a suitable position between the first and second positions (PI, P2) and to transfer the pre-pressed molded parts (10) to a transfer unit (41) of the transport device (4) in order to remove them from the path (F) of the carrier (40) for transfer to subsequent processes.

4. The first molding station (1) according to claim 3,
**characterized in that**
the transport device (4) is intended to eject the pre-pressed molded parts (10) from the suction tool (2, 2a, 2b) by means of a pressure surge and thus transfer them to the transfer unit (41).

5. The first molding station (1) according to claim 3 or 4,
**characterized in that**
the transfer unit (41) comprises a contour adapted to the shape and number of molded parts (10) on the side (41a) facing the suction tool (2, 2a, 2b) for transferring the molded parts (10) to this contour.

6. The first molding station (1) according to any of the preceding claims,
**characterized in that**
the first molding station (1) further comprises a spraying unit (7) which is provided at least for spraying the suction tool (2, 2a, 2b) having the molded parts (10) with a liquid before pre-pressing (220) during the path (F) of the carrier (40) to the second position (P2).

7. The first molding station (1) according to claim 6,
**characterized in that**
the spraying unit (7) is furthermore designed and intended to provide the molded parts (10) with a functional coating after pre-pressing (220) on the path (F) of the carrier (40) in the direction of the first position (P1), preferably also by means of spraying.

8. The first molding station (1) according to any of the preceding claims,
**characterized in that**
the first and second suction tools (2, 2a, 2b) are connected via the carrier (40) to a gas line system (42) in such a way that a negative pressure generated in the gas line system (40) by means of one or a plurality of vacuum pumps (43) is made available as suction pressure at the respective suction heads (21) for suctioning the fiber material.

9. The first molding station (1) according to any of the preceding claims,
**characterized in that**
the transport device (4) is provided via a robot arm which is freely movable in space and comprises a mounted carrier (40).

10. The first molding station (1) according to any of the preceding claims,
**characterized in that**
the contour of the pre-pressing tool (31) adapted to the first and second suction tool (2, 2a, 2b) is at least partially made of an elastomer, preferably silicone, or
**in that** the pre-pressing tool (31) comprises a flexible membrane for covering the molded parts (10) and the pre-pressing pressure (VD) is applied as gas pressure to the membrane, which is then pressed onto the outer contour of the molded part (10).

11. The first molding station (1) according to any of the preceding claims,
**characterized in that**
the first molding station (1) comprises a exchange system (5) for automatically changing the suction tools (2, 2a, 2b) and the pre-pressing tool (31), wherein a tool carrier (51) movable out of the first molding station (1) is provided in the exchange system (5) for transporting the changed tools (2, 2a, 2b, 31) out of the first molding station (1) and the tool carrier (51) can pass through a reverse process for inserting new tools (2, 2a, 2b, 31).

12. The first molding station (1) according to claim 11,
**characterized in that**
the carrier (40), as part of the exchange system (5), is designed to remove the suction tools (2, 2a, 2b) and the pre-pressing tool (31) from the positions in the molding and pre-pressing station (20, 30) during the exchange and to transfer them to the tool carrier (51) or to perform a reverse process when inserting new tools (2, 2a, 2b, 31).

13. The first molding station (1) according to claim 12,
**characterized in that**
the carrier (40) comprises, between the first and second sides (40a, 40b), at least an end face (40c) which is equipped with a receiving and unlocking device (52a, 52b) for removing the pre-pressing tool (31) from the pre-pressing station (30) and for holding it during transportation of the pre-pressing tool (31) to the tool carrier (51).

14. The first molding station (1) according to claim 13,
**characterized in that**
the transport device (4) is designed to rotate the carrier (40) between the first and second positions (P1, P2) for removing the pre-pressing tool (31) from the pre-pressing station (30) such that its end face (40c) faces the pre-pressing tool (31) and then brings the receiving and unlocking device (52a, 52b) of the carrier (40) into contact with corresponding counterparts (53a, 53b) of the pre-pressing tool (31), so that the pre-pressing tool (31) is released from its holder in the pre-pressing station (30).

15. The first molding station (1) according to claim 14,
**characterized in that**
the transport device (4) is further designed to deposit the removed pre-pressing tool (31) in the tool carrier (51) by continuing the rotation (D) of the carrier (40), preferably the carrier (40) comprises a pre-pressing tool release mechanism (54) for the held pre-pressing tool (31), so that the pre-pressing tool (31) is released for transfer by the tool carrier (51).

16. The first molding station (1) according to any of the claims 11 to 15,
**characterized in that**
the carrier (40) is further designed, after positioning one of the suction tools (2, 2a, 2b) above the tool carrier (51), to release it by means of a suction tool release mechanism (55) for the held suction tool (2, 2a, 2b) to be acquired by the tool carrier (51), and to position the other of the suction tools (2, 2a, 2b) above the suction tool (2, 2a, 2b) already acquired by means of a rotation (D) of the carrier (40) and also to release it by means of the suction tool release mechanism (55) for the suction tool (2, 2a, 2b) held for acquisition by the tool carrier (51).

17. The first molding station (1) according to any of the preceding claims,
**characterized in that**
the first molding station (1) comprises at least a further reservoir (6, 6b) having pulp and a pulp exchange system (8) which is designed to provide a or a plurality of reservoirs (6, 6a, 6b) with different pulp for molding the molded parts (10) before the carrier (40) reaches the first position (P1), depending on the process.

18. The first molding station (1) according to claim 17,
**characterized in that**
the pulp exchange system (8) for this purpose comprises rails (81) on which the pulp reservoirs (6, 6a, 6b) can be displaced, and a drive (82) for displacing the pulp reservoirs (6, 6a, 6b), which is controlled by the transport device (4) in a process-dependent manner.

19. The first molding station (1) according to claim 17 or 18,
**characterized in that**
the transport device (4) is provided for moving the carrier (40) on the path (F) between first and second positions (P1, P2) in such a way that, at a first point in time in the first position (P1), the molded part (10) is molded in one of the suction tools (2, 2a, 2b) from a first of the pulp reservoirs (6, 6a) and that in one of the suction tools (2, 2a, 2b), at least at a second point in time which is later than the first point in time and prior to pre-pressing (220), the molded part (10) is further molded with other pulp from at least a second of the reservoirs (6, 6b).

20. A fiber molding machine (100) for producing a molded part (10) from fiber material by means of a fiber molding process carried out in the fiber molding machine (100), comprising at least a first molding station (1) according to any of the claims 1 to 19 for molding and pre-molding the molded part (10) and a second molding station (60) comprising a hot-pressing station (65) for final molding of the molded part (10) via hot pressing of the pre-molded part (10).

21. The fiber molding machine (100) according to claim 20,
**characterized in that**
the fiber molding machine (100) further comprises a pulp preparation and subsequent delivery unit (50) for the subsequent delivery of pulp for the reservoir (6).

22. The fiber molding machine (100) according to claim 20 or 21,
**characterized in that**
the hot-pressing station (65) is thermally decoupled from other components of the second molding station (60), preferably an actively cooled partition is arranged between the hot-pressing station (65) and the other components of the second molding station (60).

23. The fiber molding machine (100) according to claim 20 to 22,
**characterized in that**
the second molding station (60) comprises at least two hot-pressing stations (65) which, depending on the process, selectively hot-press the pre-molded parts (10) of the first molding station (1), preferably having different hot-pressing parameters.

24. The fiber molding machine (100) according to claim 20 to 23,
**characterized in that**
the fiber molding machine (100) also comprises a punching station (70) for separating excess fiber material from the final molded part (10).

25. A method (200) for producing molded parts (10) from fiber material, preferably sustainable, degradable fiber material, by means of a fiber molding process in a fiber molding machine (100) according to any of the claims 20 to 24, comprising a first molding station (1) according to any of the claims 1 to 19 and a second molding station (60) comprising the following steps:
- Molding (210) of the molded part (10) from a reservoir (6, 6a, 6b) having a pulp as a liquid solution comprising the fiber material by means of a first and/or second suction tool (2, 2a, 2b) as a molding station (20) of the first molding station (1);
- Pre-molding (220) of the pre-molded part (10) in a pre-pressing station (30) in the first molding station (1);
- Final molding (230) of the pre-molded part (10) in the second molding station (60) by means of hot pressing; and
- Release (240) of the final molded part (10) from the fiber molding machine (100).

26. The method (200) according to claim 25, also comprising the step of separating (250) excess fiber material from the final formed molded part (10) via a punching station (70) arranged downstream of the second molding station (60) in the machine direction.

## Revendications

1. Premier poste de moulage (1) pour une installation de moulage de fibres (100) pour le moulage (210) et le préformage (220) d'une pièce moulée (10) en matériau fibreux, de préférence en matériau fibreux dégradable de manière écologique, dans un processus de moulage de fibres comprenant :
- un réservoir (6) avec une pulpe sous forme de solution liquide comprenant le matériau fibreux pour la pièce moulée (10) à mouler ;
- un premier et un deuxième outils d'aspiration (2, 2a, 2b) comme poste de formage (20) avec respectivement une pluralité de têtes d'aspiration (21) pour aspirer le matériau fibreux pour le formage (210) de la pièce moulée (10) à partir du réservoir (6) avec la pulpe ;
- un poste de pré-pressage (30) avec un outil de pré-pressage (31) ayant un contour adapté ou adaptable au premier et au deuxième outil d'aspiration (2, 2a, 2b) pour le préformage (220) des pièces moulées (10) se trouvant respectivement dans le premier et le deuxième outil d'aspiration (2, 2a, 2b), les pièces moulées (10) étant pressées avec une pression de précompression (VD) sur l'outil de précompression (31) afin de réduire la teneur en humidité dans la pièce moulée (10) et de stabiliser la forme de la pièce moulée (10) ; et
- un dispositif de transport (4) comprenant un support (40) avec le premier outil d'aspiration (2, 2a) disposé sur un premier côté (40a) du support (40) et le deuxième outil d'aspiration (2, 2b) disposé sur le deuxième côté opposé (40b) du support (40), les têtes d'aspiration respectives (21) étant disposées sur un côté respectif des outils d'aspiration (2, 2a, 2b) opposé au support (40), le support (40) pouvant être tourné (D) au moyen du dispositif de transport (4), de préférence indépendamment l'un de l'autre, et déplacé (B) au moins d'une première position (P1) pour recevoir le matériau fibreux du réservoir (6) de pâte au moyen de l'un des outils d'aspiration (2, 2a, 2b) à une deuxième position (P2) pour exercer la pression de pré-pressage (VD) sur les pièces moulées (10) se trouvant dans l'outil d'aspiration (2, 2a, 2b) le long d'une voie de déplacement (F).

2. Premier poste de moulage (1) selon la revendication 1,
**caractérisé en ce que,**
le dispositif de transport (4) est prévu pour déplacer le support (40) dans la première position (P1) sans rotation (D) du support (40) après que le pré-pressage (220) a été effectué avec l'un des outils d'aspiration (2, 2a, 2b) dans la deuxième position (P2), de sorte que des pièces moulées (10) peuvent maintenant être formées à partir du réservoir (6) avec de la pâte dans l'outil d'aspiration (2, 2a, 2b) détourné de l'outil de pré-pressage (31) lors du pré-pressage (220) effectué.

3. Premier poste de moulage (1) selon la revendication 1 ou 2,
**caractérisé en ce que,**
le dispositif de transport (4) est prévu pour, après que le pré-pressage (220) des pièces moulées (10) a été effectué avec l'un des outils d'aspiration (2, 2a, 2b) et après que le formage (210) des pièces moulées (10) a été effectué dans l'autre des outils d'aspiration (2, 2a, 2b) à faire tourner (D) le support (40) dans une position appropriée entre la première et la deuxième position (PI, P2) et à transférer les pièces moulées (10) pré-pressées à une unité de transfert (41) du dispositif de transport (4), afin de les retirer de la trajectoire (F) du support (40) pour les transférer aux processus suivants.

4. Premier poste de moulage (1) selon la revendication 3,
**caractérisé en ce que,**
le dispositif de transport (4) est prévu pour expulser les pièces moulées (10) pré-pressées de l'outil d'aspiration (2, 2a, 2b) au moyen d'un coup de pression et les transférer ainsi à l'unité de transfert (41).

5. Premier poste de moulage (1) selon la revendication 3 ou 4,
**caractérisé en ce que,**
l'unité de transfert (41) comprend un contour adapté à la forme et au nombre des pièces moulées (10) sur le côté (41a) tourné vers l'outil d'aspiration (2, 2a, 2b) pour le transfert des pièces moulées (10) sur ce contour.

6. Premier poste de moulage (1) selon l'une quelconque des revendications précédentes, **caractérisé en ce que,**
le premier poste de moulage (1) comprend en outre une unité de pulvérisation (7) qui est prévue au moins pour pulvériser un liquide sur l'outil d'aspiration (2, 2a, 2b) avec les pièces moulées (10) formées avant le pré-pressage (220) pendant le trajet (F) du support (40) vers la deuxième position (P2).

7. Premier poste de moulage (1) selon la revendication 6,
**caractérisé en ce que,**
l'unité de pulvérisation (7) est en outre conçue et prévue pour munir les pièces moulées (10) d'un revêtement fonctionnel après le pré-pressage (220) sur le trajet (F) du support (40) en direction de la première position (P1), de préférence également par pulvérisation.

8. Premier poste de moulage (1) selon l'une quelconque des revendications précédentes, **caractérisé en ce que,**
le premier et le deuxième outil d'aspiration (2, 2a, 2b) sont raccordés à un système de conduite de gaz (42) par l'intermédiaire du support (40) de telle sorte qu'une dépression générée dans le système de conduite de gaz (40) au moyen d'une ou de plusieurs pompes à vide (43) est mise à disposition en tant que pression d'aspiration sur les têtes d'aspiration respectives (21) pour aspirer le matériau fibreux.

9. Premier poste de moulage (1) selon l'une quelconque des revendications précédentes, **caractérisé en ce que,**
le dispositif de transport (4) est mis à disposition par un bras de robot librement mobile dans l'espace avec un support (40) monté.

10. Premier poste de moulage (1) selon l'une quelconque des revendications précédentes, **caractérisé en ce que,**
le contour de l'outil de pré-pressage (31) adapté au premier et au deuxième outil d'aspiration (2, 2a, 2b) est fabriqué au moins en partie en un élastomère, de préférence en silicone, ou
l'outil de pré-pressage (31) comprend une membrane flexible pour recouvrir les pièces moulées (10) et que la pression de pré-pressage (VD) est appliquée sous forme de pression de gaz à la membrane, qui est ensuite pressée sur le contour extérieur des pièces moulées (10).

11. Premier poste de moulage (1) selon l'une quelconque des revendications précédentes, **caractérisé en ce que,**
le premier poste de moulage (1) comprend un système de changement (5) pour le remplacement automatique des outils d'aspiration (2, 2a, 2b) et de l'outil de pré-pressage (31), un porte-outil (51) mobile hors du premier poste de moulage (1) étant prévu dans le système de changement (5) pour évacuer les outils remplacés (2, 2a, 2b, 31) hors du premier poste de moulage (1) est prévu et le porte-outil (51) peut suivre un processus inverse pour insérer de nouveaux outils (2, 2a, 2b, 31).

12. Premier poste de moulage (1) selon la revendication 11,
**caractérisé en ce que,**
le support (40), en tant que partie du système de changement (5), est conçu pour retirer les outils d'aspiration (2, 2a, 2b) et l'outil de pré-pressage (31) des positions dans les postes de formage et de pré-pressage (20, 30) lors de l'échange et pour les transférer au support d'outils (51) ou pour effectuer un déroulement inverse lors de l'insertion de nouveaux outils (2, 2a, 2b, 31).

13. Premier poste de moulage (1) selon la revendication 12,
**caractérisé en ce que,**
le support (40) comprend, entre le premier et le deuxième côté (40a, 40b), au moins un côté frontal (40c) qui est équipé d'un moyen de réception et de déverrouillage (52a, 52b) pour retirer l'outil de pré-pressage (31) du poste de pré-pressage (30) et pour le maintenir pendant le transport de l'outil de pré-pressage (31) vers le support de traction d'ouvrage (51).

14. Premier poste de moulage (1) selon la revendication 13,
**caractérisé en ce que,**
le dispositif de transport (4) est conçu pour, en vue d'un enlèvement de l'outil de pré-pressage (31) du poste de pré-pressage (30), faire tourner le support (40) entre la première et la deuxième position (P1, P2) de telle sorte que sa face frontale (40c) soit tournée vers l'outil de pré-pressage (31) et, ensuite, mettre en contact les moyens de réception et de déverrouillage (52a, 52b) du support (40) en contact avec des contreparties correspondantes (53a, 53b) de l'outil de pré-pressage (31), de sorte que l'outil de pré-pressage (31) est libéré de son support dans le poste de pré-pressage (30).

15. Premier poste de moulage (1) selon la revendication 14,
**caractérisé en ce que,**
le dispositif de transport (4) est en outre conçu pour déposer l'outil de pré-pressage (31) retiré dans le porte-outil (51) par une poursuite de la rotation (D) du support (40), de préférence le support (40) comprend un mécanisme de déclenchement d'outil de pré-pressage (54) pour l'outil de pré-pressage (31) maintenu, afin que l'outil de pré-pressage (31) soit libéré pour être repris par le porte-outil (51).

16. Premier poste de moulage (1) selon l'une quelconque des revendications 11 à 15, **caractérisé en ce que,**
le support (40) est en outre conçu pour, après positionnement de l'un des outils d'aspiration (2, 2a, 2b) au-dessus du porte-outil (51), libérer celui-ci au moyen d'un mécanisme de déclenchement d'outil d'aspiration (55) pour l'outil d'aspiration (2, 2a, 2b) maintenu en vue de sa prise en charge par le porte-outil (51), et, par une rotation (D) du support (40), à positionner l'autre des outils d'aspiration (2, 2a, 2b) au-dessus de l'outil d'aspiration (2, 2a, 2b) déjà pris en charge et à libérer celui-ci également par le mécanisme de déclenchement d'outil d'aspiration (55) pour l'outil d'aspiration (2, 2a, 2b) maintenu en vue de sa prise en charge par le porte-outil (51).

17. Premier poste de moulage (1) selon l'une quelconque des revendications précédentes, **caractérisé en ce que,**
le premier poste de moulage (1) comprend au moins un autre réservoir (6, 6b) avec de la pâte et un système de changement de pâte (8) qui est conçu pour mettre à disposition, avant que le support (40) n'atteigne la première position (P1), l'un ou l'autre réservoir (6, 6a, 6b) avec une autre pâte pour le moulage des pièces moulées (10), en fonction du processus.

18. Premier poste de moulage (1) selon la revendication 17,
**caractérisé en ce que,**
le système de changement de pâte (8) comprend à cet effet des rails (81) sur lesquels les réservoirs (6, 6a, 6b) de pâte peuvent être déplacés, et un moyen d'entraînement (82) pour déplacer les réservoirs (6, 6a, 6b) de pâte, qui est commandé par le dispositif de transport (4) en fonction du processus.

19. Premier poste de moulage (1) selon la revendication 17 ou 18,
**caractérisé en ce que,**
le dispositif de transport (4) est prévu pour déplacer le support (40) sur la voie de déplacement (F) entre une première et une deuxième position (P1, P2) de telle sorte qu'à un premier moment dans la première position (P1), la pièce moulée (10) soit formée dans l'un des outils d'aspiration (2, 2a, 2b) à partir d'un premier des réservoirs (6, 6a) avec de la pulpe et que, dans l'un des outils d'aspiration (2, 2a, 2b), au moins à un deuxième moment qui est postérieur au premier moment et avant le pré-pressage (220), la pièce moulée (10) est moulée à partir d'au moins un deuxième des réservoirs (6, 6b) avec une autre pulpe.

20. Installation de moulage de fibres (100) pour la fabrication d'une pièce moulée (10) en matériau fibreux au moyen d'un processus de moulage de fibres exécuté dans l'installation de moulage de fibres (100) comprenant au moins un premier poste de moulage (1) selon l'une des revendications 1 à 19 pour le moulage et le préformage de la pièce moulée (10) et un deuxième poste de moulage (60) comprenant un poste de pressage à chaud (65) pour le moulage final de la pièce moulée (10) par pressage à chaud de la pièce moulée préformée (10).

21. Installation de moulage de fibres (100) selon la revendication 20,
**caractérisée en ce que,**
l'installation de moulage de fibres (100) comprend en outre une unité de préparation et de livraison ultérieure de pâte (50) pour la livraison ultérieure de la pâte pour le réservoir (6).

22. Installation de formage de fibres (100) selon la revendication 20 ou 21,
**caractérisée en ce que,**
le poste de pressage à chaud (65) est découplé thermiquement des autres composants du deuxième poste de moulage (60), de préférence une séparation à refroidissement actif est disposée entre le poste de pressage à chaud (65) et les autres composants du deuxième poste de moulage (60).

23. Installation de moulage de fibres (100) selon les revendications 20 à 22,
**caractérisée en ce que,**
le deuxième poste de moulage (60) comprend au moins deux postes de pressage à chaud (65) qui, en fonction du processus, pressent à chaud au choix les pièces moulées préformées (10) du premier poste de moulage (1), de préférence avec des paramètres de pressage à chaud différents.

24. Installation de moulage de fibres (100) selon les revendications 20 à 23,
**caractérisée en ce que,**
l'installation de moulage de fibres (100) comprend en outre un poste de poinçonnage (70) pour séparer le matériau fibreux en excès de la pièce moulée (10) formée à la fin.

25. Procédé (200) pour la fabrication de pièces moulées (10) en matériau fibreux, de préférence en matériau fibreux dégradable sans danger pour l'environnement, au moyen d'un processus de moulage de fibres dans une installation de moulage de fibres (100) selon l'une des revendications 20 à 24 avec un premier poste de moulage (1) selon l'une des revendications 1 à 19 et un deuxième poste de moulage (60) comprenant les étapes suivantes :
- moulage (210) de la pièce moulée (10) à partir d'un réservoir (6, 6a, 6b) avec une pulpe sous forme de solution liquide avec le matériau fibreux au moyen d'un premier et/ou d'un deuxième outil d'aspiration (2, 2a, 2b) comme poste de moulage (20) du premier poste de moulage (1) ;
- préformage (220) de la pièce moulée (10) formée dans un poste de pré-pressage (30) dans le premier poste de moulage (1) ;
- moulage final (230) de la pièce préformée (10) dans le deuxième poste de moulage (60) par pressage à chaud ; et
- sortie (240) de la pièce moulée (10) formée de manière finale de l'installation de moulage de fibres (100).

26. Procédé (200) selon la revendication 25, comprenant en outre l'étape consistant à séparer (250) le matériau fibreux en excès de la pièce moulée (10) formée en fin de fabrication par un poste de poinçonnage (70) situé en aval du deuxième poste de moulage (60) dans le sens machine.
